# EUROPÄISCHE PATENTSCHRIFT

(11) **EP 3 160 780 B1**
(45) Veröffentlichungstag und Bekanntmachung des Hinweises auf die Patenterteilung: **10.10.2018**
(21) Anmeldenummer: 15730397.5
(22) Anmeldetag: 16.06.2015
(51) Int. Cl.: B60G 17/052, B60T 17/00, F15B 21/00, F15B 21/04, F04B 49/06

(54) **DRUCKLUFTVERSORGUNGSANLAGE, PNEUMATISCHES SYSTEM UND VERFAHREN ZUM BETREIBEN EINER DRUCKLUFTVERSORGUNGSANLAGE**
COMPRESSED-AIR SUPPLY SYSTEM, PNEUMATIC SYSTEM AND METHOD FOR OPERATING A COMPRESSED-AIR SUPPLY SYSTEM
INSTALLATION D'ALIMENTATION EN AIR COMPRIMÉ, SYSTÈME PNEUMATIQUE ET PROCÉDÉ DE FONCTIONNEMENT D'UNE INSTALLATION D'ALIMENTATION EN AIR COMPRIMÉ

(30) Priorität: 25.06.2014 DE 102014009418; 24.07.2014 DE 102014010956
(43) Veröffentlichungstag der Anmeldung: 03.05.2017
(73) Patentinhaber: WABCO GmbH, 30453 Hannover (DE)
(72) Erfinder: FRANK, Dieter, 30171 Hannover (DE); MEISSNER, Frank, 30453 Hannover (DE); STABENOW, Uwe, 30880 Laatzen (DE)
(74) Vertreter: Lauerwald, Jörg
(86) Internationale Anmeldenummer: PCT/EP2015/001219
(87) Internationale Veröffentlichungsnummer: WO 2015/197170

(56) Entgegenhaltungen:
- EP-A1- 0 036 569
- EP-A1- 1 233 183
- EP-A1- 2 098 429
- DE-A1- 3 523 403
- DE-A1- 19 627 403
- DE-A1-102010 054 699
- DE-A1-102011 109 500
- DE-C1- 19 724 747
- DE-U1- 8 109 217

## Beschreibung

Die Erfindung betrifft eine Druckluftversorgungsanlage zum Betreiben einer Pneumatikanlage gemäß dem Oberbegriff des Anspruchs 1 sowie ein pneumatisches System und ein Verfahren zum Steuern einer Druckluftversorgungsanlage.

Die Druckluftversorgungsanlage weist eine Druckluftzuführung auf, an die druckmittelzuführungsseitig eine Ladeanordnung mit einem Verdichter angeschlossen ist. Die Druckluftversorgungsanlage weist auch einen Druckluftanschluss zur Pneumatikanlage und einen Entlüftungsanschluss zur Umgebung, sowie eine pneumatische Hauptleitung zwischen der Druckluftzuführung und dem Druckluftanschluss, und eine Entlüftungsleitung zwischen der Druckluftzuführung und dem Entlüftungsanschluss auf. Die Erfindung betrifft auch ein pneumatisches System mit der Druckluftversorgungsanlage und einer Pneumatikanlage. Weiter betrifft die Erfindung ein Verfahren zum Betreiben einer Druckluftversorgungsanlage.

Eine Druckluftversorgungsanlage wird regelmäßig mit einem Druckmittel in Form von Druckluft betrieben. Ein Betrieb ist jedoch im Allgemeinen nicht auf einen Betrieb mit Druckmittel in Form von Druckluft beschränkt; grundsätzlich kann eine Druckluftversorgungsanlage auch mit anderen Druckmitteln als Druckluft betrieben werden. Bevorzugt kann eine Druckluftversorgungsanlage in Fahrzeugen aller Art eingesetzt werden zur Versorgung einer Pneumatikanlage eines Fahrzeugs mit Druckluft.

Eine Druckluftversorgungsanlage ist allgemein in DE 81 09 217 U1 beschrieben. Um ihre pneumatische Hauptleitung automatisch entlüften zu können, was beispielsweise vorteilhaft für einen drucklosen Verdichteranlauf ist, weist die beschriebene Druckluftversorgungsanlage ein Entlüftungsventil auf, das von einem zugeordneten Druckschalter betätigt wird. Der Druckschalter selbst ist pneumatisch mit einem der Druckluftversorgungsanlage zugeordneten Druckluftspeicher verbunden und schaltet bei Erreichen eines vorgegeben Drucks im Druckluftspeicher. Weiter aus dem Stand der Technik bekannt sind Druckluftversorgungsanlagen, deren jeweilige pneumatische Hauptleitungen durch ein elektromagnetisch angesteuertes Entlüftungsventil entlüftet werden.

Die DE 197 24 747 C1 beschreibt eine Niveauregeleinrichtung für Fahrzeuge mit Luftfedern, durch die ein Fahrzeugaufbau gegenüber mindestens einer Fahrzeugachse abgefedert ist, wobei jede Luftfeder zum Auffüllen über einen Lufttrockner und ein zur Luftfeder öffnendes Rückschlagventil mit einer Druckluftquelle verbindbar ist und jede Luftfeder zum Entleeren über ein erstes steuerbares Wegeventil, den Lufttrockner und ein zweites pneumatisch steuerbares Wegeventil mit der Atmosphäre verbindbar ist, und wobei das zweite pneumatisch steuerbare Wegeventil zwischen der Druckluftquelle und dem Lufttrockner angeordnet ist, dessen Steuereingang in einem ersten Schaltzustand des zweiten Wegeventils mit der von der Druckluftquelle erzeugten Druckluft beaufschlagt ist, wobei dann die Druckluftquelle über das zweite Wegeventil mit dem Lufttrockner verbunden ist.

Die DE 10 2010 054 699 A1 beschreibt eine Druckluftversorgungsanlage zum Betreiben einer Pneumatikanlage eines Fahrzeuges, welche eine Druckluftzuführung, eine Pneumatikhauptleitung zwischen der Druckluftzuführung und der Pneumatikanlage, einen Lufttrockner, ein Drosselmittel und wenigstens ein steuerbares Trennventil aufweist. Eine mit der Pneumatikhauptleitung und einem Entlüftungsanschluss zur Umgebung pneumatisch verbundene Entlüftungsleitung ist mit wenigstens einem steuerbaren Entlüftungsventil ausgestattet, wobei das wenigstens eine steuerbare Trennventil in einem Trennbetrieb in einen geschlossenen Zustand schaltbar ist und mit dem Drosselmittel eine Reihenanordnung in der Pneumatikhauptleitung bildet, derart dass die Pneumatikhauptleitung im Trennbetrieb bidirektional und vollständig geschlossen ist, und das wenigstens eine steuerbare Trennventil und das wenigstens eine steuerbare Entlüftungsventil eingerichtet sind, mit einem für beide gemeinsamen Steuersignal gesteuert zu werden.

Die DE 10 2010 109 500 A1 offenbart eine Druckluftversorgungsanlage zum Betreiben einer Pneumatikanlage eines Fahrzeuges, wobei zwischen einer Druckluftzuführung und einem Druckluftanschluss ein pneumatisch entsperrbares Rückschlagventil angeordnet ist.

Solche und ähnliche Druckluftversorgungsanlagen gemäß dem Stand der Technik weisen beispielsweise praktikable Lösungen zur Entlüftung der jeweiligen pneumatischen Hauptleitung auf, die jedoch mit gewissen Nachteilen behaftet sind. So ist beispielsweise bei elektromagnetisch angesteuerten Entlüftungsventilen eine hohe Anfälligkeit gegenüber elektrischen Störungen oder Kabelbrüchen gegeben. Außerdem ist stets auch eine entsprechende Treiberstufe sowie eine Ansteuerlogik in einem zugeordneten Steuergerät erforderlich. Je nach Ausbaustufe derselben kann dies erhöhte Kosten bedingen bzw. eine hohe Komplexität des Steuergerätes erfordern.
Aufgabe der Erfindung ist es, eine Druckluftversorgungsanlage, ein pneumatisches System und ein Verfahren zum Steuern einer Druckluftversorgungsanlage anzugeben, die gegenüber dem Stand der Technik verbessert, insbesondere vereinfacht sind. Insbesondere soll eine Druckluftversorgungsanlage, ein pneumatisches System und ein Verfahren zum Steuern einer Druckluftversorgungsanlage angegeben werden, die vergleichsweise einfach steuerbar sind, vorzugsweise ein vergleichsweise einfaches Entlüften einer pneumatischen Hauptleitung ermöglichen.
Die Aufgabe hinsichtlich der Druckluftversorgungsanlage wird mit einer Druckluftversorgungsanlage des Anspruchs 1 gelöst.
Erfindungsgemäß ist bei der eingangs genannten Druckluftversorgungsanlage verkürzt wiedergegeben vorgesehen, dass
- der Druckluftzuführung ein Umschaltventil zugeordnet ist, wobei
- das Umschaltventil derart druckluftgesteuert ausgebildet ist, dass die Druckluftzuführung über das Umschaltventil zur Hauptleitung offen ist oder zu öffnen ist.
Weiter ist erfindungsgemäß vorgesehen, dass
- mittels einem von der Ladeanordnung zur Hauptleitung erzeugbaren Strömungsdrucks an der Druckluftzuführung
- in nicht druckbeaufschlagtem Zustand der Druckluftzuführung der Druckluftanschluss zur Entlüftungsleitung strömungsverbunden ist, insbesondere ein Auslassanschluss zu öffnen ist, und
- in druckbeaufschlagtem Zustand der Druckluftzuführung der Druckluftanschluss zur Entlüftungsleitung nicht strömungsverbunden ist, insbesondere ein Auslassanschluss zu schließen ist.

Die Erfindung führt auch auf ein pneumatischen System des Anspruchs 13; dieses weist eine erfindungsgemäße Druckluftversorgungsanlage, insbesondere nach einem der Ansprüche 1 bis 12, und eine Pneumatikanlage auf. Vorzugsweise ist die Pneumatikanlage an dem Druckluftanschluss der Druckluftversorgungsanlage angeschlossen. Das pneumatische System kann entsprechend der für die Druckluftversorgungsanlage beschriebenen Weiterbildungen weitergebildet werden.

Die Aufgabe hinsichtlich des Verfahrens zum Betreiben einer Druckluftversorgungsanlage wird mit einem Verfahren des Anspruchs 14 gelöst. Erfindungsgemäß sind bei dem Verfahren zum Betrieben einer Druckluftversorgungsanlage die Schritte vorgesehen, dass:
- in einem Ladebetrieb angesaugte Druckluft von einer Ladeanordnung verdichtet und über ein Umschaltventil zu einer pneumatischen Hauptleitung zugeführt wird,
- in einem Entlüftungsbetrieb Druckluft aus der pneumatischen Hauptleitung über das Umschaltventil in eine Entlüftungsleitung abgeleitet wird, wobei
- im Ladebetrieb das Umschaltventil zur Entlüftungsleitung durch einen Strömungsdruck der verdichteten Druckluft geschlossen gehalten wird.
Das Konzept der Erfindung führt auch auf eine Steuer- und Regeleinrichtung, die ausgebildet ist, ein pneumatisches System ansteuernd gemäß dem Verfahren der Erfindung zu betreiben. Dazu kann die Steuer- und Regeleinrichtung mittels Software- und/oder Hardware-Modulen versehen sein, die ausgebildet sind, ein oder mehrere Verfahrensschritte des Verfahrens nach einem der Ansprüche 14 bis 19 auszuführen.

Die Erfindung hat erkannt, dass sich auf diese Weise eine Druckluftversorgungsanlage und/oder ein pneumatisches System vergleichsweise einfach betreiben lassen, vorzugsweise ein vergleichsweise einfaches Entlüften einer pneumatischen Hauptleitung ermöglicht ist. Insbesondere kann bei dieser Art Ventilanordnung eine entsprechende Treiberstufe sowie Ansteuerlogik in dem zugeordneten Steuergerät entbehrlich sein oder zumindest vereinfacht werden. Damit entfallen auch die oben beschriebenen Nachteile hinsichtlich Komplexität und Kosten einer Druckluftversorgungsanlage. Durch die Strömungsansteuerung des Umschaltventils, die durch die Ladeanordnung selbst bewirkt wird, ist eine externe Ansteuerung des Umschaltventils über eine von der Ladeanordnung verschiedene pneumatische Steuerquelle nicht erforderlich.

Die Erfindung hat darüber hinaus erkannt, dass dauerhaft geschlossene Ventile zum Kleben neigen, d. h. ihre eigentliche Schaltfunktion versagt. Darüber hinaus wurde beobachtet, dass dauerhaft geschlossene Entlüftungsventile leicht am Ventilsitz einfrieren, was bei beispielsweise bei einem Nutzfahrzeug zu einem hohen Sicherheitsrisiko führen kann. Dadurch dass die Druckluftzuführung bei einem nicht druckbeaufschlagten Umschaltventil --also dann wenn die Ladeanordnung nicht verdichtet-- zur Entlüftungsleitung offen und die Druckluftzuführung zur Hauptleitung druckunabhängig offen ist, ist ein Kleben des Ventils praktisch ausgeschlossen.

Ein Vorteil der erfindungsgemäßen Druckluftversorgungsanlage ergibt sich durch einen Anschluss an eine Pneumatikanlage, beispielsweise eine Druckluftfederanlage eines Fahrzeugs. Dadurch dass das Umschaltventil im druckbeaufschlagten Zustand die pneumatische Hauptleitung zur Entlüftungsleitung schließt bzw. geschlossen hält kann bereits ein Speicherbetrieb in der Pneumatikanlage durchgeführt werden, ohne dass es eines zusätzlichen Absperrventils zwischen einer Galerie der Druckluftfederanlage und der Druckluftversorgungsanlage bedarf. Insbesondere kann zum Betrieb mit Speicher (Umfüllen) der Kompressor anlaufen, um die Entlüftung zu schließen.

Vorteilhafte Weiterbildungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise ist das Umschaltventil an der Druckluftzuführung unter Anschluss der pneumatischen Hauptleitung und der Entlüftungsleitung angeordnet. Insbesondere ist das Umschaltventil an der Druckluftzuführung unter Anschluss eines ersten Teils der pneumatischen Hauptleitung an einem Drucksteueranschluss und unter Anschluss eines zweiten Teils der pneumatischen Hauptleitung an einem Durchlassanschluss und unter Anschluss der Entlüftungsleitung an einem Auslassanschluss angeordnet ist.

Vorzugsweise ist vorgesehen, dass der Druckluftzuführung ein Umschaltventil zugeordnet ist, wobei- das Umschaltventil derart druckmittelgesteuert ausgebildet ist, dass die Druckluftzuführung über das Umschaltventil zur Hauptleitung druckunabhängig offen ist, wobei mittels einem von der Ladeanordnung zur Hauptleitung erzeugbaren Strömungsdrucks die Druckluftzuführung in nicht druckbeaufschlagtem Zustand zur Entlüftungsleitung zu öffnen und in druckbeaufschlagtem Zustand zur Entlüftungsleitung zu schließen ist. Anders ausgedrückt ist über das Umschaltventil die Druckluftzuführung zur Hauptleitung druckunabhängig offen, derart dass mittels einem von der Ladeanordnung zur Hauptleitung erzeugbaren Strömungsdrucks die Druckluftzuführung in nicht druckbeaufschlagtem Zustand zur Entlüftungsleitung zu öffnen und in druckbeaufschlagtem Zustand zur Entlüftungsleitung zu schließen ist.

Vorzugsweise ist vorgesehen, dass
- in einem Entlüftungsbetrieb Druckluft aus der pneumatischen Hauptleitung über das Umschaltventil in eine Entlüftungsleitung abgeleitet wird, wobei
- im Ladebetrieb das Umschaltventil zur Entlüftungsleitung durch einen Strömungsdruck der verdichteten Druckluft geschlossen gehalten wird.

In einer bevorzugten Weiterbildung, um ein besonders robustes Umschaltventil bereitzustellen, weist das Umschaltventil einen Druckluftverteilraum auf, von dem ein mit der Ladeanordnung verbundener Drucksteueranschluss, ein mit der pneumatischen Hauptleitung verbundener Durchlassanschluss, und ein mit der Entlüftungsleitung verbundener Auslassanschluss ab, wobei ein gegen Federkraft bewegbarer Umschaltventilkörper bei offenem Durchlassanschluss zur Hauptleitung in nicht druckbeaufschlagtem Zustand des Drucksteueranschlusses den Auslassanschluss zur Entlüftungsleitung öffnet und in druckbeaufschlagtem Zustand den Auslassanschluss zur Entlüftungsleitung schließt.

Ein vorteilhaft einfacher Aufbau der Druckluftversorgungsanlage kann dadurch erreicht werden, dass das Umschaltventil ausschließlich über den Drucksteueranschluss druckmittelgesteuert ist. Auf eine elektromagnetische Ansteuerung des Umschaltventils und eine dafür erforderliche Ansteuerelektronik kann gänzlich verzichtet werden. Vorzugsweise ist vorgesehen, dass die Druckluftzuführung über das Umschaltventil zur Hauptleitung druckunabhängig offen ist oder zu öffnen ist, wobei das Umschaltventil ausschließlich über den Drucksteueranschluss und/oder direkt über den Betrieb des Verdichters druckluftgesteuert ausgebildet ist.

Bevorzugt ist das Umschaltventil direkt über den Betrieb des Verdichters druckmittelgesteuert. Derart wird auf einfache Art und Weise ein druckloser Verdichteranlauf ermöglicht. Befindet sich der Verdichter in zunächst Ruhe, so strömt keine Druckluft von der Druckluftzuführung in das Umschaltventil, so dass dieses in Entlüftungsstellung befindlich ist und die pneumatische Hauptleitung mit der Entlüftungsleitung verbindet. Da die Druckluftzuführung zur pneumatischen Hauptleitung druckunabhängig offen ist, kann die von dem danach anlaufenden Verdichter komprimierte Druckluft zunächst noch über den Entlüftungsanschluss entweichen. Gleichzeit wird durch ansteigenden Strömungsdruck der Druckluft das Umschaltventil graduell in Sperrstellung umgeschaltet. In Sperrstellung sind die pneumatische Hauptleitung und die Entlüftungsleitung pneumatisch voneinander getrennt.

In einer abgewandelten Weiterbildung hat es sich als vorteilhaft erwiesen, dass die Druckluftzuführung über das Umschaltventil zur Hauptleitung druckabhängig offen ist oder zu öffnen ist, wobei das Umschaltventil über den Drucksteueranschluss und/oder direkt über den Betrieb des Verdichters druckluftgesteuert ausgebildet ist, wobei ein Mittel zur Druckbegrenzung, insbesondere ein Druckluftdurchschaltventil, dem Drucksteueranschluss vorgeschaltet und/oder nachgeschaltet oder mit diesem realisiert ist. Dadurch kann vorteilhaft beispielsweise ein Druckminimum und/oder ein Druckmaximum, als zulässiger Minimaldruck und/oder Höchstdruck, vorgegeben werden, bei dem der Drucksteueranschluss eine Druckbeaufschlagung für einen Umschaltventilkörper zulässt. Es kann ggf. auch ein anderer Druckverlauf über das Mittel zur Druckbegrenzung für den Drucksteueranschluss vorgegeben werden.

Das Umschaltventil kann ausgebildet sein in Abhängigkeit eines an dem Drucksteueranschluss anliegenden Drucks und/oder in Abhängigkeit eines vom Drucksteueranschluss in die pneumatische Hauptleitung strömenden Volumenstroms umzuschalten. Derart sind verschiedene Betriebsarten des Umschaltventils realisierbar. Um beispielsweise einen unzulässigen Überdruck in einer mit der Druckluftversorgungsanlage verbundenen Pneumatikanlage zu verhindern, kann das Umschaltventil ausgebildet sein, den Durchlassanschluss mit dem Auslassanschluss zu verbinden, wenn ein an dem Drucksteueranschluss anliegender Höchstdruck überschritten wird. Alternativ oder zusätzlich kann das Umschaltventil ausgebildet sein, den Durchlassanschluss mit dem Auslassanschluss zu verbinden, wenn ein den Drucksteueranschluss durchströmender Mindestvolumenstrom unterschritten wird.

Dem Umschaltventil kann ein Druckluftdurchschaltventil vorgeschaltet sein, wobei das Druckluftdurchschaltventil bevorzugt ausgebildet ist, erst bei einem an dem Druckluftdurchschaltventil anliegenden Mindestdruck durchzuschalten. Derart kann die Schaltdynamik des Umschaltventils in Richtung seiner Sperrstellung verbessert werden. Ein anlaufender Verdichter arbeitet dementsprechend zunächst gegen einen bis zu dem Mindestdruck ansteigenden Gegendruck. Ist der besagte Mindestdruck erreicht, schaltet das Druckluftdurchschaltventil durch, so dass das Druckluft unter einem nunmehr höheren Anfangsdruck in das Umschaltventil einströmt und diese schlagartig umsteuert. Selbstverständlich ist der Mindestdruck des Druckluftdurchschaltventils derart zu wählen, dass ein reibungsloser Anlauf des Verdichters gewährleistet ist.

In einer weiter bevorzugten Weiterbildung weist das Umschaltventil eine mit dem Umschaltventilkörper wirkverbundene Ventilfeder auf. Bevorzugt ist die Ventilfederkraft der Ventilfeder ausgelegt, eine drucksteueranschlussseitig am Umschaltventilkörper anliegende Gasdruckkraft zu überwinden, wenn der Verdichter in Ruhe ist.

Der Verdichter und/oder der Auslassanschluss können statisch undicht ausgelegt sein, d. h. tatsächlich undicht, jedoch unter Strömungsbedingungen dynamisch als dicht zu betrachten, um ein Umschalten des Umschaltventils zum automatischen Entlüften einer an den Druckluftanschluss anschließbaren Pneumatikanlage zu ermöglichen.

Bevorzugt weist die Druckluftversorgungsanlage einen Lufttrockner auf. Der Lufttrockner kann in der pneumatischen Hauptleitung zwischen dem Umschaltventil und dem Druckluftanschluss eingebunden sein. Dies hat sich als besonders vorteilhaft erwiesen, um eine konstruktiv besonders einfache Regeneration des Lufttrockners bereitzustellen.

Es hat sich als vorteilhaft erwiesen, dass die pneumatische Hauptleitung eine Hauptdrossel aufweist, die zwischen Druckluftanschluss und Umschaltventil angeordnet ist. Bevorzugt ist die Hauptdrossel zwischen Lufttrockner und Druckluftanschluss eingebunden. Eine Entlüftungsdrossel ist bevorzugt in der Entlüftungsleitung zwischen dem Umschaltventil und dem Entlüftungsanschluss vorgesehen. Für eine einfache und doch robuste konstruktive Ausgestaltung ist vorteilhaft, die Entlüftungsdrossel so vorzusehen, dass sie gleichzeitig als Federaufstand der mit dem Umschaltventilkörper wirkverbundenen Ventilfeder dient.

Vorzugsweise ist ein Lufttrockner zwischen Umschaltventil und Druckluftanschluss angeschlossen. Um eine besonders kompakte Druckluftversorgungsanlage bereitzustellen, hat es sich als vorteilhaft erwiesen, die Entlüftungsleitung zumindest abschnittsweise innerhalb eines durch den Lufttrockner aufgespannten Volumens anzuordnen.

Um eine Bewegung des Umschaltventilkörpers aus der Entlüftungsstellung in die Sperrstellung zu erleichtern, kann der Umschaltventilkörper koaxial beweglich zur Entlüftungsleitung angeordnet sein. Ist es erforderlich die Umschaltventilfunktion von einem möglichen Staudruck in der Entlüftungsleitung zu entkoppeln kann alternativ der Umschaltventilkörper quer beweglich zur Entlüftungsleitung angeordnet sein.

Betreffend das Verfahren dient ein Ladebetrieb insbesondere zum Füllen einer Pneumatikanlage, die an die Druckluftversorgungsanlage angeschlossen sein kann. Im Ladebetrieb wird Druckluft über den Ansauganschluss angesaugt, um anschließend von der Ladeanordnung verdichtet zu werden. Die verdichtete Druckluft kann über das Umschaltventil in die pneumatische Hauptleitung und von dort über einen Druckluftanschluss in die Pneumatikanlage strömen. Weist die Pneumatikanlage beispielsweise ein oder mehrere Bälge und/oder einen Druckspeicher auf, so können auch diese über die pneumatische Hauptleitung der Druckluftversorgungsanlage gefüllt werden. Im Ladebetrieb wird eine pneumatische Verbindung zwischen pneumatischer Hauptleitung und Entlüftungsleitung durch das Umschaltventil abgesperrt gehalten.

Ein Entlüftungsbetrieb dient zum Entlüften einer pneumatischen Hauptleitung. Ein in der pneumatischen Hauptleitung befindliche Druckluft wird im Entlüftungsbetrieb über das Umschaltventil hin zu einer Entlüftungsleitung und danach über einen Entlüftungsanschluss in die Umgebung abgeführt. Ist an dem Druckluftanschluss beispielsweise eine Pneumatikanlage angeschlossen, so kann auch eben diese Pneumatikanlage im Entlüftungsbetrieb entlüftet werden. Weist die Pneumatikanlage beispielsweise einen Ventilblock mit einer Gallery auf, so kann in einem Entlüftungsbetrieb der Druckluftversorgungsanlage auch die Gallery entlüftet über die pneumatische Hauptleitung der Druckluftversorgungsanlage entlüftet werden. Weist die Pneumatikanlage beispielsweise ein oder mehrere Bälge und/oder einen Druckspeicher auf, so können auch diese über die pneumatische Hauptleitung der Druckluftversorgungsanlage entlüftet werden.

In einer bevorzugten Weiterbildung geht dem Ladebetrieb ein Verdichteranlaufbetrieb voraus, bei dem das Umschaltventil zur Entlüftungsleitung durch einen ansteigenden Strömungsdruck der verdichteten Druckluft geschlossen wird.

Es hat sich als vorteilhaft erwiesen, dass das Umschaltventil zur Entlüftungsleitung nur so schnell geschlossen wird, dass ein den Strömungsdruck erzeugender Verdichter im Wesentlichen drucklos anläuft. Dies wirkt sich positiv auf die Dauerhaltbarkeit des Verdichters bzw. der Ladeanordnung auf. Solange das Umschaltventil zur Entlüftungsleitung nicht vollständig geschlossen ist, kann ein kleiner Teil der durch den Verdichter verdichteten Druckluft über die Entlüftungsleitung entweichen.

In einer besonders bevorzugten Weiterbildung wird die pneumatische Hauptleitung in einem dem Entlüftungsbetrieb vorausgehenden Verdichter-Stoppbetrieb vorentlüftet so dass das Umschaltventil zur Entlüftungsleitung geöffnet wird. Dies kann beispielsweise durch einen statisch undicht ausgelegten pneumatischen Pfad zwischen Ladeanordnung und pneumatischer Hauptleitung geschehen. Der Verdichter-Stoppbetrieb kann sich unmittelbar an einen Ladebetrieb anschließen und in zeitlich in dem Moment einsetzen, in dem die Ladeanordnung bzw. der Verdichter in Ruhe sind. Der Verdichter-Stoppbetrieb kann zeitlich mit dem Ladebetrieb überlappen, jedenfalls dann, wenn ein durch einen auslaufenden Verdichter erzeugter Strömungsdruck bereits nicht mehr ausreicht, um das Umschaltventil in Sperrstellung zu halten.

In einer besonders bevorzugten Weiterbildung ist bei allen Betriebsarten und/oder Verfahrensschritten ein pneumatischer Pfad zwischen Ladeanordnung und pneumatischer Hauptleitung druckunabhängig offen. Dies erleichtert die Verfahrensführung deutlich.

Um eine Fehlansteuerung des Umschaltventils in einem Verfahren wirksam zu vermeiden hat es sich als vorteilhaft herausgestellt, dass das Umschaltventil zur Entlüftungsleistung ausschließlich durch einen Strömungsdruck der verdichteten Druckluft geschlossen wird.

Vor einem Speicherbetrieb einer an die Druckluftversorgungsanlage angeschlossenen Pneumatikanlage können ein Ladebetrieb und/oder ein Anlaufbetrieb der Druckluftversorgungsanlage erfolgen.

Grundsätzlich lässt sich das Konzept der Erfindung in unterschiedlichsten Ausführungsformen realisieren, von denen einige in der Zeichnung konkret erläutert sind.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen. Weitere Vorteile, Merkmale und Einzelheiten der Erfindung ergeben sich aus der nachfolgenden Beschreibung der bevorzugten Ausführungsformen sowie anhand der Zeichnung. Im Einzelnen ist gezeigt in:
- Fig.1: eine schematische Darstellung einer ersten Ausführungsform eines pneumatischen Systems mit Druckluftversorgungsanlage im Entlüftungsbetrieb und Pneumatikanlage am Beispiel einer Luftfederanlage für ein Fahrzeug;
- Fig.2: eine schematische Darstellung der Ausführungsform aus Fig.1 im Ladebetrieb;
- Fig.3: eine schematische Darstellung einer zweiten Ausführungsform eines pneumatischen Systems mit Druckluftversorgungsanlage im Verdichter-Stoppbetrieb und Pneumatikanlage am Beispiel einer Luftfederanlage für ein Fahrzeug;
- Fig.4: eine schematische Darstellung der Ausführungsform aus Fig.3 im Entleerungsbetrieb;
- Fig.5: eine schematische Darstellung einer dritten Ausführungsform einer Druckluftversorgungsanlage in einem konstruktiven Detail;
- Fig.6: eine schematische Darstellung einer vierten Ausführungsform einer Druckluftversorgungsanlage in einem konstruktiven Detail;
- Fig.7: eine schematische Darstellung einer fünften Ausführungsform einer Druckluftversorgungsanlage in einem konstruktiven Detail;
- Fig.8: eine schematische Darstellung einer sechsten Ausführungsform einer Druckluftversorgungsanlage in einem konstruktiven Detail;
- Fig.9: eine schematische Darstellung einer siebten Ausführungsform einer Druckluftversorgungsanlage in einem konstruktiven Detail;
- Fig.10: eine bevorzugte Ausführungsform eines Umschaltventils, das derart druckmittelgesteuert ausgebildet ist, dass eine Druckluftzuführung über das Umschaltventil zur Hauptleitung und Entlüftungsleitung einstellbar ist;
- Fig.11: einen bevorzugten Verfahrensablauf zum Betriebe einer Druckluftversorgungsanlage.

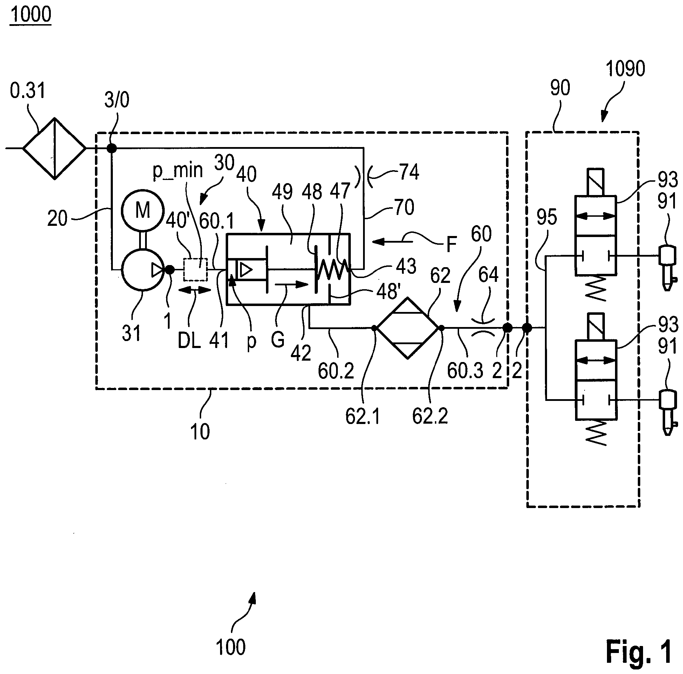

Mit Bezug auf Fig.1 bis Fig.9 werden im Folgenden Varianten einer Druckluftversorgungsanlage erläutert. Für gleiche oder ähnliche Merkmale oder Merkmale gleicher oder ähnlicher Funktion werden im Folgenden gleiche Bezugszeichen verwendet.

Für ein nicht näher dargestelltes Fahrzeug 1000 weist ein pneumatisches System 100 in Fig.1 eine Druckluftversorgungsanlage 10 und eine Pneumatikanlage 90 auf, hier in Form einer schematisch angedeuteten Luftfederanlage 1090. Die Pneumatikanlage 90, die Teil eines hier nicht vollständig dargestellten Fahrzeugluftfedersystems mit der Luftfederanlage 1090 ist, weist vorliegend zwei Balgventile 93 auf, die an eine Galerie 95 angeschlossen sind.

Die Druckluftversorgungsanlage 10 weist eine Druckluftzuführung 1 auf, an die druckmittelzuführungsseitig eine Ladeanordnung 30 mit einem Verdichter 31 zur Erzeugung von Druckluft DL angeschlossen ist, die an einem ersten Teil 60.1 einer pneumatischen Hauptleitung 60 ansteht.

Weiterhin umfasst die Druckluftversorgungsanlage 10 einen Druckluftanschluss 2, an den die Pneumatikanlage 90 angeschlossen ist, sowie einen Entlüftungsanschluss 3 zur Umgebung. Die pneumatische Hauptleitung 60 verläuft zwischen der Druckluftzuführung 1 und dem Druckluftanschluss 2. Eine Entlüftungsleitung 70 verläuft zwischen der Druckluftzuführung 1 und dem Entlüftungsanschluss 3. Der Verdichter 31 ist ansaugseitig mit dem Ansauganschluss 0 verbunden, der vorliegend mit dem Entlüftungsanschluss 3 zusammenfällt; beiden ist ein Filter 0.31 ansaugseitig vorgeschaltet.

Die pneumatische Hauptleitung 60 weist ein Umschaltventil 40 auf, das mit einem Drucksteueranschluss 41 über den ersten Teil 60.1 der pneumatischen Hauptleitung 60 an der Druckluftzuführung 1 angeschlossen ist. Der Drucksteueranschluss 41 ist also über den ersten Teil 60.1 der pneumatischen Hauptleitung 60 mit der Ladeanordnung 30 verbunden, sodass ein Druck p am Drucksteueranschluss 41 angelegt werden kann. Das Umschaltventil 40 weist weiter einen Durchlassanschluss 42 auf, der an einen zweiten Teil 60.2 der pneumatischen Hauptleitung 60 angeschlossen ist. Das Umschaltventil 40 weist weiter einen Auslassanschluss 43 auf, der an die Entlüftungsleitung 70 angeschlossen ist. Die Entlüftungsleitung 70 weist eine Entlüftungsdrossel 74 auf, die zwischen Auslassanschluss 43 und Entlüftungsanschluss 3 in der Entlüftungsleitung 70 angeordnet ist.

Das Umschaltventil 40 weist einen Druckluftverteilraum 49 auf, in dem ein Umschaltventilkörper 48 mit einer wirkverbundenen Ventilfeder 47 gegenüber einem Ventilsitz 48' angeordnet ist. Zwischen dem Durchlassanschluss 42 des Umschaltventils 40 und dem Druckluftanschluss 2 ist ein Lufttrockner 62 in der pneumatischen Hauptleitung 60 mit Anschlüssen 62.1, 62.2 angeschlossen. Mit dem ersten Anschluss 62.1 des Lufttrockners 62 ist der Durchlassanschluss 42 des Umschaltventils 40 über den zweiten Teil 60.2 der pneumatischen Hauptleitung 60 verbunden.

Zwischen dem zweiten Anschluss 62.2 des Lufttrockners 62 und dem Druckluftanschluss 2 ist eine Hauptdrossel 64 in einem dritten Teil 60.3 der pneumatischen Hauptleitung 60 angeordnet.

Vorliegend ist das Umschaltventil 40 ausschließlich über den Drucksteueranschluss 41 druckmittelgesteuert. Da das Umschaltventil 40 unmittelbar dem Verdichter 31 nachgeschaltet ist, ist das Umschaltventil 40 direkt über den Betrieb des Verdichters 31 druckmittelgesteuert.

Die Druckluftzuführung 1 ist über das Umschaltventil 40 druckunabhängig zur Hauptleitung 60 offen, d. h. die Druckluftzuführung 1 steht unabhängig von einer jeweiligen Position des Umschaltventilkörpers 48 in pneumatischer Verbindung mit der pneumatischen Hauptleitung 60, nämlich dem ersten Teil 60.1 der pneumatischen Hauptleitung 60. Im nicht druckbeaufschlagten Zustand, dargestellt in Fig.1, ist die pneumatische Hauptleitung 60 über das Umschaltventil 40 mit der Entlüftungsleitung 70 pneumatisch verbunden. Erst bei einem Verdichterstart wird das volumenstromabhängige Umschaltventil 40 angeströmt und damit gegen eine Federkraft F betätigt, d. h. geschlossen. Die Druckluftversorgungsanlage 10 der Zeichnung, hier Fig. 1, realisiert damit eine Trocknerschaltung mit einem selbstdichtenden Lufttrocknerausgang, d.h. vom ersten Anschluss 62.1 des Lufttrockners 62 zum Auslassanschluss 43 mittels des Umschaltventilkörpers 48; dies unter Entfall eines Entlüftungsmagneten gemäß nachfolgender Schaltung.

Dem Drucksteueranschluss 41 des Umschaltventils 40 kann optional jedoch ein Druckluftdurchschaltventil 40' im ersten Teil 60.1 der pneumatischen Hauptleitung 60 vorgeschaltet und/oder nachgeschaltet sein, das derart ausgebildet ist, dass dies erst bei einem an dem Druckluftdurchschaltventil 40' anliegenden Mindestdruck p_min durchschaltbar ist; d. h. öffnet. Erst eine entsprechende Druckdifferenz aufgrund des Mindestdrucks p_min zu einem statischen Druck führt dann zu einem Volumenstrom, welcher dann die Umschaltung des Umschaltventils 40, d. h. Schließen desselben unter Betätigung des Umschaltventilkörpers 48 gegen die Federkraft F zum Ventilsitz 48' hin, bewirkt, d. h. ein statischer Druck unterhalb des Mindestdrucks p_min ist allein nicht ausreichend, die Umschaltung des Umschaltventils 40 zu bewirken.

Das Umschaltventil 40 selbst ist derart druckluftgesteuert ausgebildet, dass mittels diesem der Durchlassanschluss 42 mit dem Auslassanschluss 43 verbunden bleibt; nämlich der Auslassanschluss 43 offen gehalten wird für den Fall, dass eine den Drucksteueranschluss 41 durchströmende Druckluft DL einen Mindestvolumenstrom V_min unterschreitet. Das Umschaltventil 40 weist eine mit einem Umschaltventilkörper 48 wirkverbundene Ventilfeder 47 auf, deren Ventilfederkraft F ausgebildet ist, eine drucksteueranschlussseitig am Umschaltventilkörper 48 anliegende Summenkraftbestehend aus Gasdruckkraft G und Reibung-- zu überwinden, für den Fall, dass der Verdichter 31 in Ruhe ist. Während also der Verdichter 31 durch seinen Betrieb den Lufttrocknerausgang geschlossen hält indem der Umschaltventilkörper 48 auf seinen Ventilsitz 48' gedrückt wird, fällt bei einem Verdichterstop der Umschaltventilkörper 48 wegen fehlender Anströmkraft der Gasdruckkraft G durch die Federkraft F von seinem Ventilsitz 48' ab und in die Ausgangslage zurück. Dadurch wird der Lufttrocknerausgang, d. h. vom ersten Anschluss 62.1 des Lufttrockners 62 zum Auslassanschluss 43, mittels des Umschaltventilkörpers 48 am Ventilsitz 48' geöffnet. Der Lufttrockner 62 wird vollständig entlüftet, insbesondere auch die Galerie 95 der Pneumatikanlage 90.

Im Folgenden wird die Funktion der in Fig.1 dargestellten Druckluftversorgungsanlage 10 näher erläutert. Die in Fig.1 dargestellte Entlüftungsstellung des Umschaltventils 40 wird eingenommen, wenn sich die Druckluftversorgungsanlage 10 in einem Entlüftungsbetrieb befindet. Im Entlüftungsbetrieb ist der Verdichter 31 der Ladeanordnung 30 in Ruhe, es strömt keine Druckluft von der Ladeanordnung 30 über den Drucksteueranschluss 41 in einen Druckluftverteilraum 49 des Umschaltventils 40 ein. Dementsprechend ist der im Druckluftverteilraum 49 angeordnete Umschaltventilkörper 48 drucksteueranschlussseitig nicht angeströmt - somit ist eine pneumatische Verbindung zwischen pneumatischer Hauptleitung 60 und Entlüftungsleitung 70 gegeben, da der Umschaltventilkörper 48 aufgrund der Ventilfederkraft F der Ventilfeder 47 von seinem Sitz abgehoben gehalten wird und somit der Auslassanschluss 43 vom Druckluftverteilraum 49 zur Entlüftungsleitung 70 offen ist. In der pneumatischen Hauptleitung befindliche oder über den Druckluftanschluss 2 aus der Pneumatikanlage in die Druckluftversorgungsanlage rückströmende Druckluft wird über die Entlüftungsleitung 70 abgeleitet. Durch die Ventilfeder 47 wird diese pneumatische Verbindung zwischen pneumatischer Hauptleitung 60 und Entlüftungsleitung 70 geöffnet gehalten. Die Balgventile 93, vorliegend als 2/2-Wege-Ventile ausgebildet, befinden sich in Sperrstellung, so dass keine Druckluft aus den Balgventilen 93 nachgeschalteten Bälgen 91 entweichen kann.

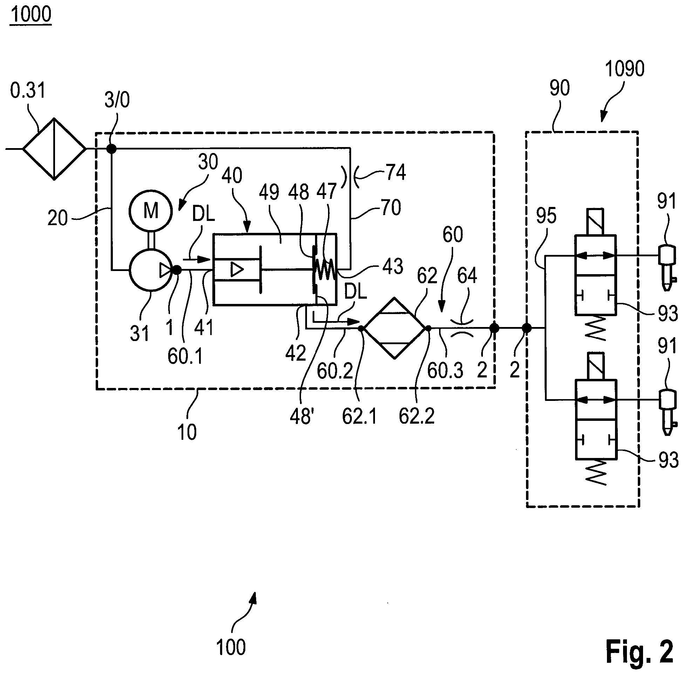

Fig.2 zeigt die Ausführungsform aus Fig.1 im Ladebetrieb. Im Ladebetrieb wird ein über den Ansauganschluss 0 angesaugte Druckluft von dem Verdichter 31 verdichtet und steht damit an der Druckluftzuführung 1 an; die Druckluft DL kann, wie mit den Pfeilen dargestellt, dem Umschaltventil 40 über den Drucksteueranschluss 41 und dem ersten Teil 60. 1 der pneumatischen Hauptleitung 60 zugeführt werden. Die über den Drucksteueranschluss 41 unter Druck p in den Druckluftverteilraum 49 des Umschaltventils 40 einströmende Druckluft strömt den Umschaltventilkörper 48 an. Die am Umschaltventilkörper 48 resultierende Strömungsdruckkraft ist größer als die durch die Ventilfeder 47 aufgebrachte Rückstellkraft und drückt diesen auf seinen Ventilsitz 48'. Dementsprechend verschließt der Umschaltventilkörper 48 die pneumatische Verbindung zwischen dem ersten Teil 60.1 der pneumatischen Hauptleitung 60 und der Entlüftungsleitung 70 am Ventilsitz 48'. Die kontinuierliche Anströmung des Umschaltventilkörpers 48 sorgt dafür, dass im Ladebetrieb das Umschaltventil 40 zur Entlüftungsleitung 70 durch einen Strömungsdruck p der verdichteten Druckluft DL geschlossen gehalten wird.

Ebenfalls in Fig.2 ist gezeigt, dass die Druckluftzuführung 1 zum ersten Teil 60.1 der pneumatischen Hauptleitung 60 druckunabhängig offen ist. Die durch den Verdichter 31 verdichtete Druckluft DL strömt dementsprechend, wie mit den Pfeilen dargestellt, über den Durchlassanschluss 42 des Umschaltventils 40 in den zweiten Teil 60.2 der pneumatischen Hauptleitung 60. Im weiteren Verlauf gelangt die Druckluft DL durch den Lufttrockner 62 und den dritten Teil 60.3 der pneumatischen Hauptleitung 60 mit der Hauptdrossel 64 zum Druckluftanschluss 2.

Vorliegend befinden sich die Balgventile 93 der Pneumatikanlage 90 in Offenstellung, sodass die Druckluft DL, die dem Druckluftanschluss 2 vom Verdichter 31 zugeführt wird, in die Bälge 91 einströmen kann. Dies führt beispielsweise zum Anheben eines Fahrzeugs, wenn die Pneumatikanlage 90 Teil einer bezeichneten Luftfederanlage 1090, z. B. mit einer Niveauregulierungsanlage, eines Fahrzeugs 1000 ist.

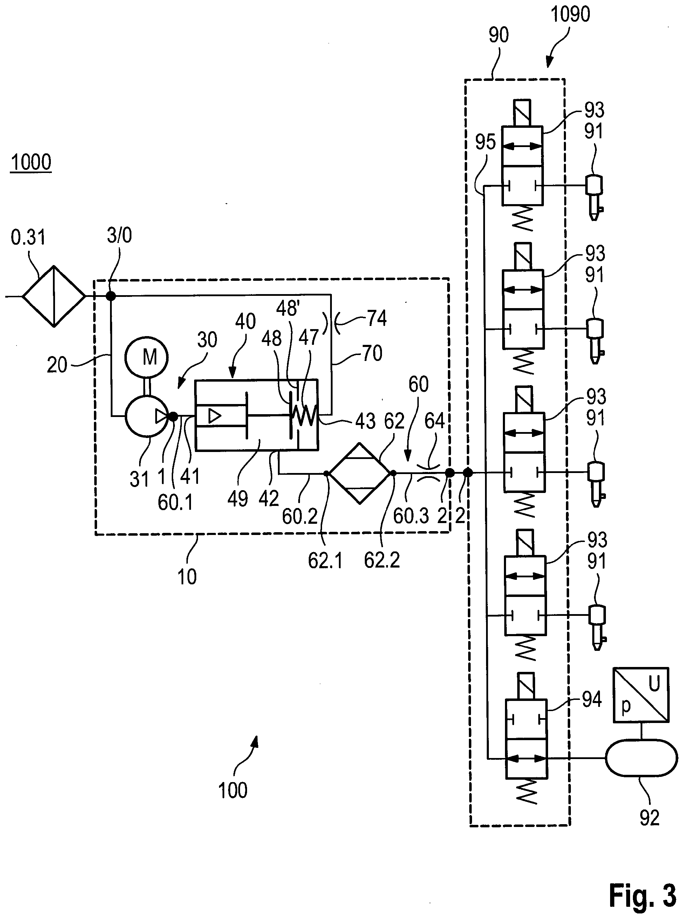

Im Unterschied zu der Ausführungsform der Fig.1 und Fig.2 weist das pneumatische System 100 der Fig.3 eine Pneumatikanlage 90 mit einem 5-fach-Ventilblock bestehend aus vier Balgventilen 93 sowie ein mit einem Speicher 92 verbundenes Speicherventil 94 auf, wobei die Ventile an eine Galerie 95 angeschlossen sind. Hinsichtlich der Druckluftversorgungsanlage 10 selbst entspricht die in Fig.3 gezeigte Ausführungsform der in Fig.1 gezeigten.

Wie erläutert, ist vorliegend das Umschaltventil 40 selbst derart druckluftgesteuert ausgebildet, dass mittels diesem der Durchlassanschluss 42 mit dem Auslassanschluss 43 verbunden bleibt, für den Fall, dass eine den Drucksteueranschluss 41 durchströmende Druckluft DL einen Mindestvolumenstrom V_min unterschreitet. Alternativ oder zusätzlich (in den Fig. 1 und 2 nicht gezeigt), insbesondere zusätzlich, kann das Umschaltventil 40 selbst derart druckluftgesteuert ausgebildet sein, dass mittels diesem der Durchlassanschluss 42 mit dem Auslassanschluss 43 verbunden wird, für den Fall, dass ein im Drucksteueranschluss 41 herrschender statischer Druck einen zulässigen Höchstdruck p_max überschreitet. Damit ist vorteilhaft eine Überdrucksicherung im Rahmen einer Druckbegrenzungsventilfunktion realisiert, welche den Lufttrockner 62 und die Pneumatikanlage 90 vor Überdruck schützt und diesen stattdessen in die Entlüftungsleitung 70 abbaut.

Die Ventilfeder 47 kann zur Realisierung der Druckbegrenzungsventilfunktion des Umschaltventils 40 derart ausgelegt sein, dass wenn ein im Drucksteueranschluss 41 herrschender statischer Druck im Ladebetrieb einen zulässigen Höchstdruck p_max überschritten hat der Durchlassanschluss 42 mit dem Auslassanschluss 43 verbunden wird, d.h. der Umschaltventilkörper 48 oberhalb des zulässigen Höchstdrucks p_max von seinem Ventilsitz 48' abhebt und in die Ausgangslage zurückfällt und einen weiteren Druckaufbau im Lufttrockner 62 und/oder der Pneumatikanlage 90 unterbindet. Im Fall eines derart hohen Drucks oberhalb des Höchstdrucks p_max ist zumeist ein Volumenstrom der den Drucksteueranschluss 41 durchströmenden Druckluft DL wieder gering; d.h. eine den Drucksteueranschluss 41 durchströmende Druckluft DL unterschreitet regelmäßig zudem einen Mindestvolumenstrom V_min wodurch die auf den Umschaltventilkörper wirkende Strömungskraft der Druckluft DL nachlässt. Wegen fehlender Anströmkraft gegen die Federkraft F fällt damit der Umschaltventilkörper 48 in die Ausgangslage zurück und öffnet die Entlüftungsleitung 70, d.h. verbindet den Durchlassanschluss 42 mit dem Auslassanschluss 43.

Anhand der in Fig.3 gezeigten Ausführungsform wird der Verdichter-Stoppbetrieb erläutert.. Der Verdichter-Stoppbetrieb der Fig.3 ist dem Ladebetrieb der mit Bezug auf Fig.2 beschrieben ist, zeitlich unmittelbar nachgelagert. Im Verdichter-Stoppbetrieb ist die Druckluftzuführung 1 zum ersten Teil 60.1 der pneumatischen Hauptleitung 60 offen, wohingegen die pneumatische Hauptleitung 60 zur Entlüftungsleitung 70 abgesperrt ist.

Aufgrund des gerade beendeten Verdichterbetriebs herrscht im pneumatischen Pfad, insbesondere der pneumatischen Hauptleitung 60, zwischen Verdichter 31 und Druckluftanschluss 2 ein gegenüber dem Umgebungsdruck erhöhter Systemdruck. Die durch diesen erhöhten Systemdruck auf den Umschaltventilkörper 48 wirkende Druckkraft ist größer als die durch die Ventilfeder 47 aufgebrachte Kraft. Somit ist die pneumatische Hauptleitung 60 zur Entlüftungsleitung 70 zunächst noch verschlossen; das Umschaltventil 40 befindet sich noch in der Sperrstellung wie diese in Fig. 2 gezeigt ist.

Um nun eine durch die Ventilfeder 47 getriebene Rückkehr des Umschaltventilkörpers 48 in Entlüftungsstellung zu bewirken wie sie in Fig. 3 gezeigt ist, muss der im Druckluftverteilraum 49 vorherrschende Systemdruck auf Umgebungsdruck zurückgeführt werden. Um dies zu erreichen, ist der Verdichter 31 statisch undicht ausgelegt. Alternativ oder zusätzlich kann auch der Auslassanschluss 43 oder aber auch eine andere im pneumatischen Pfad zwischen Verdichter 31 und Druckluftanschluss 2 anordnete Komponente statisch undicht ausgelegt sein. Durch die genannte statische Undichtigkeit kann sich der unmittelbar bei Beginn des Verdichter-Stoppbetriebs vorherrschende Systemdruck graduell auf Umgebungsdruck abbauen, wodurch das Umschaltventil 40 die Entlüftungsstellung einnimmt. D. h. die durch den Systemdruck auf den Umschaltventilkörper 48 wirkende Druckkraft nimmt ab und ist schließlich dann geringer als die durch die Ventilfeder 47 aufgebrachte Kraft; der in Fig. 3 dargestellte Umschaltventilkörper 48 ist somit in einer Stellung gezeigt, in der er von seinem Ventilsitz 48' abgehoben ist.

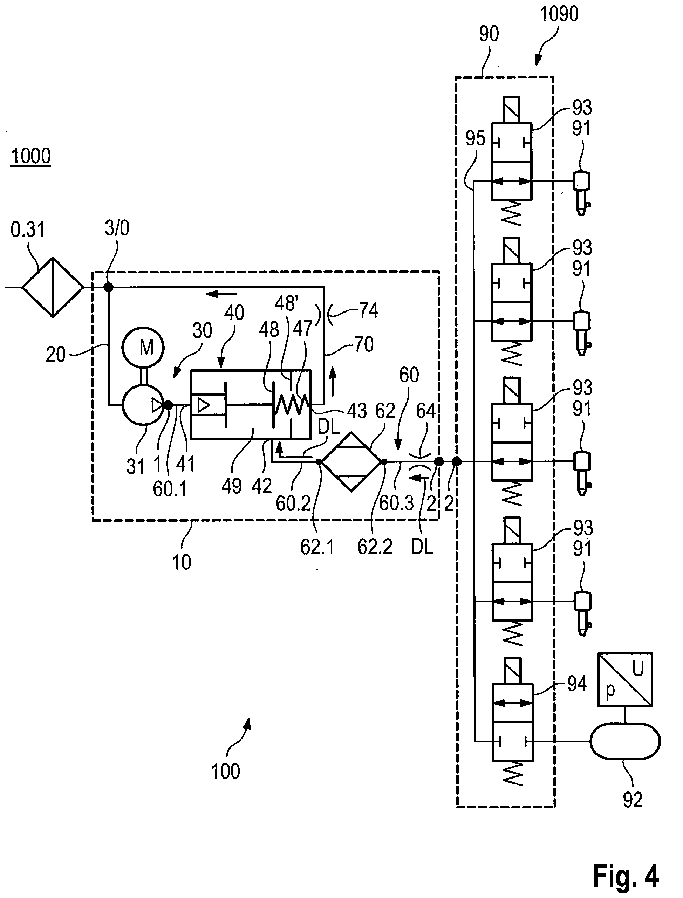

Fig.4 zeigt die mit Bezug auf Fig.3 beschriebene Ausführungsform, wobei sich das Umschaltventil 40 nunmehr in Entlüftungsstellung (Fahrzeug absenken) befindet. Ein in der pneumatischen Hauptleitung 60 befindliche Druckluft DL oder eine über den Druckluftanschluss 2 aus der Pneumatikanlage 90 in die Druckluftversorgungsanlage 10 rückströmende Druckluft DL kann nun, wie mit den Pfeilen dargestellt, über den dritten Teil 60.3 der pneumatischen Hauptleitung 60 und das Umschaltventil 40 in die Entlüftungsleitung 70 und von dort aus zum Entlüftungsanschluss 3 strömen. In diesem Entlüftungsbetrieb wird gleichzeitig der Lufttrockner 62 im dritten Teil 60.3 der pneumatischen Hauptleitung 60 regeneriert.

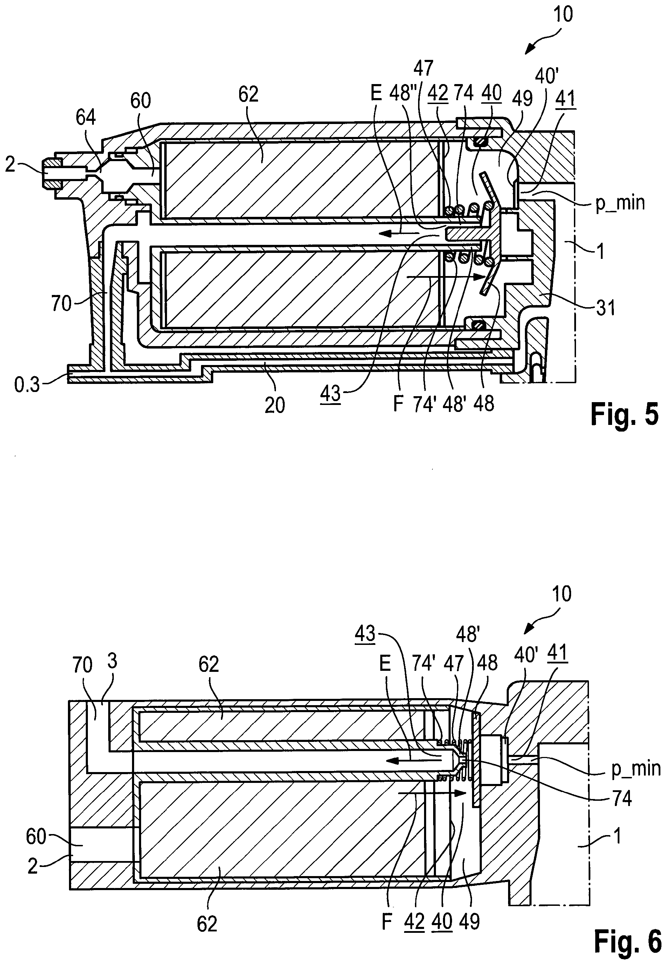

Fig.5 zeigt eine konstruktive Ausgestaltung einer Druckluftversorgungsanlage 10. Die Druckluftversorgungsanlage 10 weist eine Druckluftzuführung 1 auf, an die druckmittelführungsseitig ein Verdichter 31 eingeschlossen ist. Weiterhin weist die Druckluftversorgungsanlage 10 ein Druckluftanschluss 2 zu einer nicht dargestellte Pneumatikanlage 90, einen Entlüftungsanschluss 3 zur Umgebung sowie einen Ansauganschluss 0 auf, der vorliegend mit dem Entlüftungsanschluss 3 zusammen fällt. Der Verdichter 31 ist über eine Ansaugleitung 20 mit dem Ansauganschluss verbunden. Eine pneumatische Hauptleitung 60 verläuft zwischen der Druckluftzuführung 1 und dem Druckluftanschluss 2. Die pneumatische Hauptleitung 60 weist dabei einen Lufttrockner 62 auf, die pneumatische Hauptleitung 60 verläuft durch den Lufttrockner 62 hindurch. Eine Entlüftungsleitung 70 verläuft zwischen der Druckluftzuführung 1 und dem Entlüftungsanschluss 3, wobei die Entlüftungsleitung 70 abschnittsweise innerhalb eines durch den Lufttrockner 62 aufgespannten Volumens angeordnet ist. Die Druckluftzuführung weist ferner ein Umschaltventil 40 auf, über das die Druckluftzuführung 1 zur Hauptleitung 60 druckunabhängig offen ist. Das Umschaltventil 40 weist einen Druckluftverteilraum 49 auf, in dem ein gegen die Federkraft F der Ventilfeder 47 bewegbarer Umschaltventilkörper 48 angeordnet ist. Ferner weist das Umschaltventil ein mit dem Luftverdichter 31 der Ladeanordnung 30 verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43 auf. Durch den teilweise in die Entlüftungsleitung 70 hineinragenden Ventilsitz 48' des Umschaltventilkörpers 48 wird eine Entlüftungsdrossel 74 definiert. Dem Drucksteueranschluss 41 des Umschaltventils 40 ist ein --hier beispielhaft als Lamellenventil ausgebildetes-- als Mittel zur Druckbegrenzung dienendes Druckluftdurchschaltventil 40' nachgeschaltet oder vorgeschaltet --hier mit diesem realisiert--, das derart ausgebildet ist, dass dies erst bei einem an dem Druckluftdurchschaltventil 40' anliegenden Mindestdruck p_min durchschaltbar ist. Die Druckluftzuführung 1 über das Umschaltventil 40 zur Hauptleitung 60 druckabhängig zu öffnen.

Im vorliegenden Fall ist die Entlüftungsdrossel 74 damit über eine Engstelle 48" gebildet. Die Entlüftungsdrossel 74 kann in einer abgewandelten Ausführungsform gleichzeitig den Federaufstand der mit dem Umschaltventilkörper 48 in Kontakt stehenden Ventilfeder 47 bilden. Ferner ist der Umschaltventilkörper 48 koaxial beweglich zur Entlüftungsleitung 70 angeordnet. Die Ventilfeder 47 ist bezüglich der Entlüftungsdrossel 74 derart angeordnet, dass die Druckluftentlüftungsrichtung E parallel zur Federkraft F orientiert ist.

Im Folgenden wird näher auf die Funktion der in Fig.5 dargestellten Druckluftversorgungsanlage 10 eingegangen.. Dargestellt ist die Druckluftversorgungsanlage 10 in einem Entlüftungsbetrieb, d. h. es wird keine Druckluft über den Ansauganschluss 0 angesaugt und über den Verdichter 31 verdichtet. Dementsprechend ist die Druckluftzuführung 1 nicht druckbeaufschlagt, der Umschaltventilkörper 48 nicht druckangeströmt und von seinem Ventilsitz 48' abgehoben. Dementsprechend befindet sich das Umschaltventil 40 in Entlüftungsstellung, d. h. ein über den Druckluftanschluss 2 eintretende Druckluft kann über den Druckluftverteilraum 49 in die Entlüftungsleitung 70 eintreten, um von dort aus dem Entlüftungsanschluss 3 zugeführt zu werden. Ebenfalls aus Fig.5 ersichtlich ist, dass die Druckluftzuführung 1 über das Umschaltventil 40 druckunabhängig zur Hauptleitung 60 geöffnet ist. D. h. unabhängig von einer jeweiligen Stellung des Umschaltventilkörpers 48 kann Druckluft über die Druckluftzuführung 1 hin zum Druckluftanschluss 2 strömen. Wird nun die Druckluftversorgungsanlage 10 in einen Verdichteranlaufbetrieb versetzt, so beginnt ein Ansaugen von Druckluft über den Ansauganschluss 0 und eine Zuführung der angesaugten Druckluft über die Ansaugleitung 20 hin zum Verdichter 31. Die nun über den Verdichter 31 verdichtete Druckluft gelangt über den Drucksteueranschluss 41 (z. B. ein Druckventil) in den Druckluftverteilraum 49 und strömt den tellerförmig ausgebildeten Umschaltventilkörper 48 an.

Durch den Strömungsdruck der den Umschaltventilkörper 48 anströmenden Druckluft wird der Umschaltventilkörper 48 gegen die Federkraft F der Ventilfeder 47 auf seinen Ventilsitz 48' gepresst, womit der Druckluftverteilraum 49 zur Entlüftungsleitung 70 abgeschottet ist. Die nun über die Druckluftzuführung 1 in den Druckluftverteilraum 49 einströmende Druckluft kann nunmehr lediglich über die pneumatische Hauptleitung mit dem Lufttrockner 62 hin zum Druckluftanschluss 2 strömen. Kommt der Verdichter 31 zum Stillstand, d. h. wird keine neue Druckluft verdichtet, bleibt zunächst der Umschaltventilkörper 48 in seiner geschlossenen Stellung auf dem Ventilsitz 48'. Dadurch, dass der Verdichter 31 statisch undicht ausgelegt ist, kann der im Druckluftverteilraum 49 herrschende Überdruck über die Druckluftzuführung 1 und den Verdichter 31 in die Entlüftungsleitung 20 zurückströmen. Im Folgenden wird durch die expandierende Ventilfeder 47 der Umschaltventilkörper 48 in die Entlüftungsstellung bewegt, d. h. wieder von seinem Ventilsitz 48' abgehoben.

Die Fig. 6 zeigt eine alternative konstruktive Ausgestaltung einer Druckluftversorgungsanlage 10. Die Druckluftversorgungsanlage 10 weist eine Druckluftzuführung 1 auf. Weiterhin weist die Druckluftversorgungsanlage 10 ein Druckluftanschluss 2 zu einer nicht dargestellte Pneumatikanlage 90 und einen Entlüftungsanschluss 3 zur Umgebung auf. Eine pneumatische Hauptleitung 60 verläuft zwischen der Druckluftzuführung 1 und dem Druckluftanschluss 2. Die pneumatische Hauptleitung 60 weist dabei einen Lufttrockner 62 auf, die pneumatische Hauptleitung 60 verläuft durch den Lufttrockner 62 hindurch. Eine Entlüftungsleitung 70 verläuft zwischen der Druckluftzuführung 1 und dem Entlüftungsanschluss 3, wobei die Entlüftungsleitung 70 abschnittsweise innerhalb eines durch den Lufttrockner 62 aufgespannten Volumens angeordnet ist. Die Druckluftversorgungsanlage 10 weist eine Entlüftungsdrossel 74 auf, die in der Entlüftungsleitung 70 angeordnet ist. Die Druckluftversorgungsanlage 10 weist ferner ein Umschaltventil 40 mit einem mit der Druckluftzuführung verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43 auf. Dem Drucksteueranschluss 41 des Umschaltventils 40 ist ein als Lamellenventil ausgebildetes und als Mittel zur Druckbegrenzung dienendes Druckluftdurchschaltventil 40' nachgeschaltet, das derart ausgebildet ist, dass dies erst bei einem an dem Druckluftdurchschaltventil 40' anliegenden Mindestdruck p_min durchschaltbar ist. Somit ist die Druckluftzuführung 1 über das Umschaltventil 40 zur Hauptleitung 60 druckabhängig zu öffnen.

Das Umschaltventil 40 weist einen Druckluftverteilraum 49 auf, in dem ein gegen die Federkraft F der Ventilfeder 47 bewegbarer vorliegend tellerförmig ausgebildeter Umschaltventilkörper 48 angeordnet ist. Der Umschaltventilkörper 48 ist koaxial beweglich zur Druckluftentlüftungsrichtung E der Entlüftungsdrossel 74 angeordnet. Die Ventilfeder 47 ist bezüglich der Entlüftungsdrossel 74 derart angeordnet, dass die Druckluftentlüftungsrichtung E parallel zur Federkraft F orientiert ist. Die Entlüftungsdrossel 74 bildet gleichzeitig einen Ventilsitz 48' des Umschaltventilkörpers 48 und den Federaufstand 74' der mit dem Umschaltventilkörper 48 in Kontakt stehenden Ventilfeder 47. Im vorliegend gezeigten nicht druckbeaufschlagtem Zustand der Druckluftzuführung 1 ist der Druckluftanschluss 2 zur Entlüftungsleitung 70 strömungsverbunden. In diesem Zustand wird das Umschaltventil 40 durch die Federkraft F der Ventilfeder 47 geöffnet gehalten; d.h. der Umschaltventilkörper 48 ist von seinem Ventilsitz 48' abgehoben. Durch eine (nicht gezeigte) Druckluftbeaufschlagung der Druckluftzuführung 1 wird der Umschaltventilkörper 48 entgegen der Federkraft F der Ventilfeder 47 bewegt und auf seinen Ventilsitz 48' gedrückt; somit das Umschaltventil 40 derart verschlossen, dass der Druckluftanschluss 2 zur Entlüftungsleitung 70 nicht mehr strömungsverbunden ist.

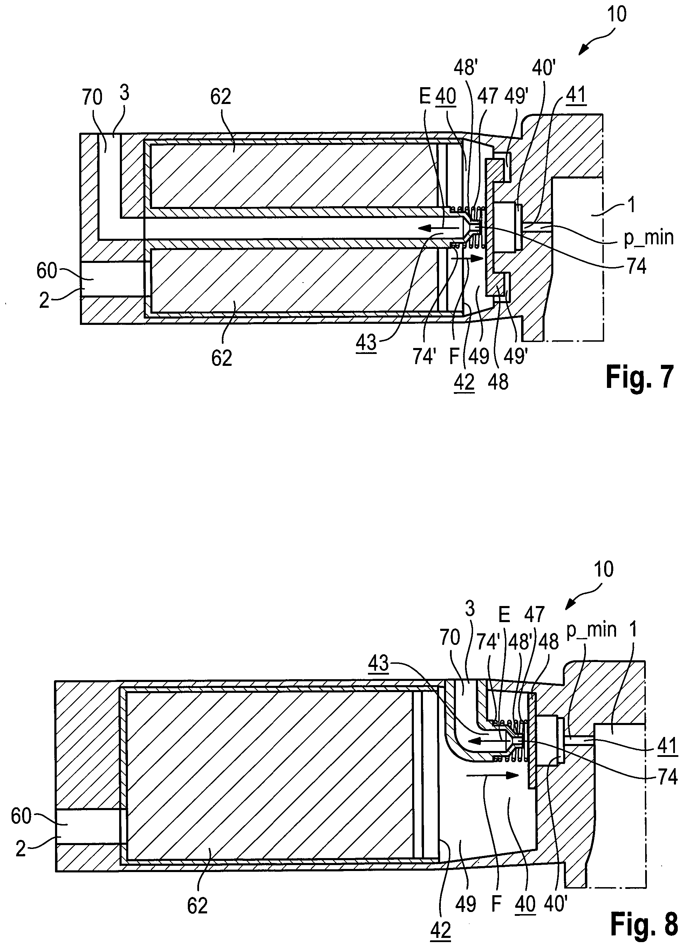

Fig. 7 zeigt eine weitere alternative konstruktive Ausgestaltung einer Druckluftversorgungsanlage 10. Die Druckluftversorgungsanlage 10 weist eine Druckluftzuführung 1 auf. Weiterhin weist die Druckluftversorgungsanlage 10 ein Druckluftanschluss 2 zu einer nicht dargestellte Pneumatikanlage 90 und einen Entlüftungsanschluss 3 zur Umgebung auf. Eine pneumatische Hauptleitung 60 verläuft zwischen der Druckluftzuführung 1 und dem Druckluftanschluss 2. Die pneumatische Hauptleitung 60 weist dabei einen Lufttrockner 62 auf, die pneumatische Hauptleitung 60 verläuft durch den Lufttrockner 62 hindurch. Eine Entlüftungsleitung 70 verläuft zwischen der Druckluftzuführung 1 und dem Entlüftungsanschluss 3, wobei die Entlüftungsleitung 70 abschnittsweise innerhalb eines durch den Lufttrockner 62 aufgespannten Volumens angeordnet ist. Die Druckluftversorgungsanlage 10 weist eine Entlüftungsdrossel 74 auf, die in der Entlüftungsleitung 70 angeordnet ist. Die Druckluftversorgungsanlage 10 weist ferner ein Umschaltventil 40 mit einem mit der Druckluftzuführung verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43 auf. Dem Drucksteueranschluss 41 des Umschaltventils 40 ist ein als Lamellenventil ausgebildetes und als Mittel zur Druckbegrenzung dienendes Druckluftdurchschaltventil 40' nachgeschaltet, das derart ausgebildet ist, dass dies erst bei einem an dem Druckluftdurchschaltventil 40' anliegenden Mindestdruck p_min durchschaltbar ist. Somit ist die Druckluftzuführung 1 über das Umschaltventil 40 zur Hauptleitung 60 druckabhängig zu öffnen.

Das Umschaltventil 40 weist einen Druckluftverteilraum 49 auf, in dem ein gegen die Federkraft F der Ventilfeder 47 bewegbarer vorliegend schalenförmig ausgebildeter Umschaltventilkörper 48 angeordnet ist. Der Umschaltventilkörper 48 ist koaxial beweglich zur Druckluftentlüftungsrichtung E der Entlüftungsdrossel 74 angeordnet. Die Ventilfeder 47 ist bezüglich der Entlüftungsdrossel 74 derart angeordnet, dass die Druckluftentlüftungsrichtung E parallel zur Federkraft F orientiert ist. Die Entlüftungsdrossel 74 bildet gleichzeitig einen Ventilsitz 48' des Umschaltventilkörpers 48 und den Federaufstand 74' der mit dem Umschaltventilkörper 48 in Kontakt stehenden Ventilfeder 47. Im vorliegend in Fig. 7 gezeigten nicht druckbeaufschlagtem Zustand der Druckluftzuführung 1 ist der Druckluftanschluss 2 zur Entlüftungsleitung 70 strömungsverbunden. In diesem Zustand wird das Umschaltventil 40 durch die Federkraft F der Ventilfeder 47 geöffnet gehalten d.h. der Umschaltventilkörper 48 ist von seinem Ventilsitz 48' abgehoben.

Durch eine (nicht gezeigte) Druckluftbeaufschlagung der Druckluftzuführung 1, also mit Aufnahme des Ladebetriebs, wird der Umschaltventilkörper 48 entgegen der Federkraft F der Ventilfeder 47 bewegt in Richtung seines Ventilsitzes 48' bewegt um das Umschaltventil 40 derart zu verschließen, dass der Druckluftanschluss 2 zur Entlüftungsleitung 70 nicht mehr strömungsverbunden ist. Um am Anfang dieser Bewegung ein Abheben des Umschaltventilkörpers 48 aus der in Fig. 7 gezeigten Stellung entgegen der Federkraft F der Ventilfeder 47 zu erleichtern, weist das Umschaltventil 40 einen Hilfsdruckluftverteilraum 49' auf. Bei einer Druckluftbeaufschlagung der Druckluftzuführung 1 gelangt ein Teil der Druckluft DL in den Hilfsdruckluftverteilraum 49' und resultiert in einer Kraftkomponente, die entgegen der Federkraft F der Ventilfeder 47 orientiert ist. Im Verlauf des Ladebetriebs wird der Umschaltventilkörper 48 auf seinen Ventilsitz 48' gedrückt; somit das Umschaltventil 40 derart verschlossen, dass der Druckluftanschluss 2 zur Entlüftungsleitung 70 nicht mehr strömungsverbunden ist.

Fig. 8 zeigt eine weitere alternative konstruktive Ausgestaltung einer Druckluftversorgungsanlage 10. Die Druckluftversorgungsanlage 10 weist eine Druckluftzuführung 1 auf. Weiterhin weist die Druckluftversorgungsanlage 10 ein Druckluftanschluss 2 zu einer nicht dargestellte Pneumatikanlage 90 und einen Entlüftungsanschluss 3 zur Umgebung auf. Eine pneumatische Hauptleitung 60 verläuft zwischen der Druckluftzuführung 1 und dem Druckluftanschluss 2. Die pneumatische Hauptleitung 60 weist dabei einen Lufttrockner 62 auf, die pneumatische Hauptleitung 60 verläuft durch den Lufttrockner 62 hindurch. Eine Entlüftungsleitung 70 verläuft zwischen der Druckluftzuführung 1 und dem Entlüftungsanschluss 3. Die Entlüftungsleitung 70 ist außerhalb eines durch den Lufttrockner 62 aufgespannten Volumens angeordnet. Die Druckluftversorgungsanlage 10 weist eine Entlüftungsdrossel 74 auf, die in der Entlüftungsleitung 70 angeordnet ist. Die Druckluftversorgungsanlage 10 weist ferner ein Umschaltventil 40 mit einem mit der Druckluftzuführung verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43 auf. Dem Drucksteueranschluss 41 des Umschaltventils 40 ist ein als Lamellenventil ausgebildetes und als Mittel zur Druckbegrenzung dienendes Druckluftdurchschaltventil 40' nachgeschaltet, das derart ausgebildet ist, dass dies erst bei einem an dem Druckluftdurchschaltventil 40' anliegenden Mindestdruck p_min durchschaltbar ist. Somit ist die Druckluftzuführung 1 über das Umschaltventil 40 zur Hauptleitung 60 druckabhängig zu öffnen.

Das Umschaltventil 40 weist einen Druckluftverteilraum 49 auf, in dem ein gegen die Federkraft F der Ventilfeder 47 bewegbarer vorliegend tellerförmig ausgebildeter Umschaltventilkörper 48 angeordnet ist. Der Umschaltventilkörper 48 ist koaxial beweglich zur Druckluftentlüftungsrichtung E der Entlüftungsdrossel 74 angeordnet. Die Ventilfeder 47 ist bezüglich der Entlüftungsdrossel 74 derart angeordnet, dass die Druckluftentlüftungsrichtung E parallel zur Federkraft F orientiert ist. Die Entlüftungsdrossel 74 bildet gleichzeitig einen Ventilsitz 48' des Umschaltventilkörpers 48 und den Federaufstand 74' der mit dem Umschaltventilkörper 48 in Kontakt stehenden Ventilfeder 47. Im vorliegend gezeigten nicht druckbeaufschlagtem Zustand der Druckluftzuführung 1 ist der Druckluftanschluss 2 zur Entlüftungsleitung 70 strömungsverbunden. In diesem Zustand wird das Umschaltventil 40 durch die Federkraft F der Ventilfeder 47 geöffnet gehalten. Durch eine (nicht gezeigte) Druckluftbeaufschlagung der Druckluftzuführung 1 wird der Umschaltventilkörper 48 entgegen der Federkraft F der Ventilfeder 47 bewegt und auf seinen Ventilsitz 48' gedrückt; somit das Umschaltventil 40 derart verschlossen, dass der Druckluftanschluss 2 zur Entlüftungsleitung 70 nicht mehr strömungsverbunden ist.

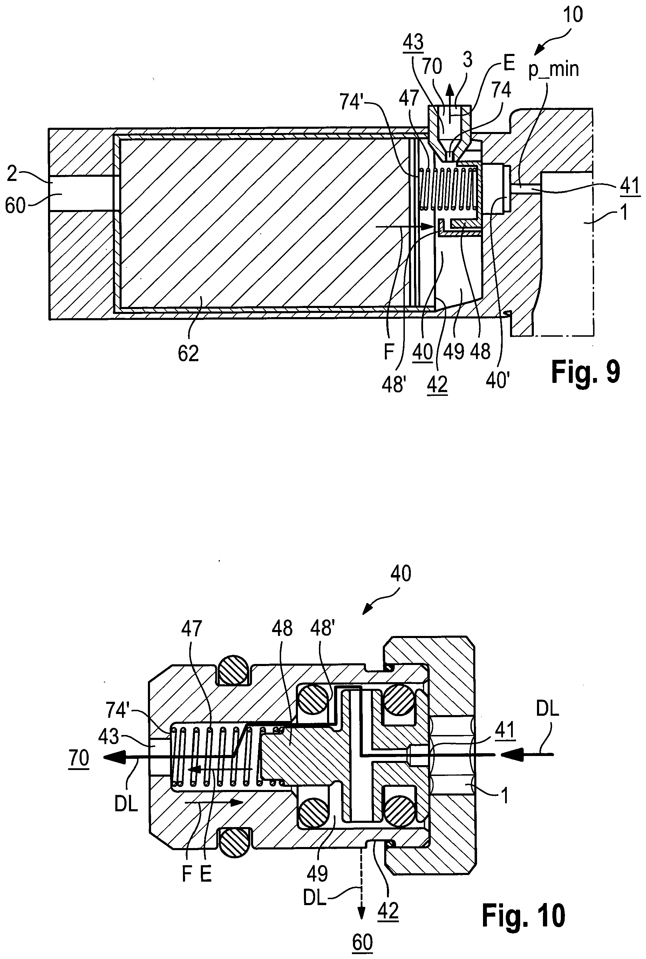

Fig. 9 zeigt eine weitere alternative konstruktive Ausgestaltung einer Druckluftversorgungsanlage 10. Die Druckluftversorgungsanlage 10 weist eine Druckluftzuführung 1 auf. Weiterhin weist die Druckluftversorgungsanlage 10 ein Druckluftanschluss 2 zu einer nicht dargestellte Pneumatikanlage 90 und einen Entlüftungsanschluss 3 zur Umgebung auf. Eine pneumatische Hauptleitung 60 verläuft zwischen der Druckluftzuführung 1 und dem Druckluftanschluss 2. Die pneumatische Hauptleitung 60 weist dabei einen Lufttrockner 62 auf, die pneumatische Hauptleitung 60 verläuft durch den Lufttrockner 62 hindurch. Eine Entlüftungsleitung 70 verläuft zwischen der Druckluftzuführung 1 und dem Entlüftungsanschluss 3. Die Entlüftungsleitung 70 ist außerhalb eines durch den Lufttrockner 62 aufgespannten Volumens angeordnet. Die Druckluftversorgungsanlage 10 weist eine Entlüftungsdrossel 74 auf, die in der Entlüftungsleitung 70 angeordnet ist. Die Druckluftversorgungsanlage 10 weist ferner ein Umschaltventil 40 mit einem mit der Druckluftzuführung verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43 auf. Dem Drucksteueranschluss 41 des Umschaltventils 40 ist ein als Lamellenventil ausgebildetes und als Mittel zur Druckbegrenzung dienendes Druckluftdurchschaltventil 40' nachgeschaltet, das derart ausgebildet ist, dass dies erst bei einem an dem Druckluftdurchschaltventil 40' anliegenden Mindestdruck p_min durchschaltbar ist. Somit ist die Druckluftzuführung 1 über das Umschaltventil 40 zur Hauptleitung 60 druckabhängig zu öffnen.

Das Umschaltventil 40 weist einen Druckluftverteilraum 49 auf, in dem ein gegen die Federkraft F der Ventilfeder 47 bewegbarer vorliegend hülsenförmig ausgebildeter Umschaltventilkörper 48 angeordnet ist. Der Umschaltventilkörper 48 ist quer beweglich zur Druckluftentlüftungsrichtung E der Entlüftungsdrossel 74 angeordnet. Die Ventilfeder 47 ist bezüglich der Entlüftungsdrossel 74 derart angeordnet, dass die Druckluftentlüftungsrichtung E quer zur Federkraft F orientiert ist. Einen Ventilsitz 48' des Umschaltventilkörpers 48 ist vorliegend als Kragen ausgebildet, der dem Umschaltventil 40 angeformt ist. Der Lufttrockner 62 bildet den Federaufstand 74' der mit dem Umschaltventilkörper 48 in Kontakt stehenden Ventilfeder 47. Im vorliegend gezeigten nicht druckbeaufschlagtem Zustand der Druckluftzuführung 1 ist der Druckluftanschluss 2 zur Entlüftungsleitung 70 strömungsverbunden. In diesem Zustand wird das Umschaltventil 40 durch die Federkraft F der Ventilfeder 47 geöffnet gehalten. Durch eine (nicht gezeigte) Druckluftbeaufschlagung der Druckluftzuführung 1 wird der Umschaltventilkörper 48 entgegen der Federkraft F der Ventilfeder 47 bewegt und auf seinen Ventilsitz 48' gedrückt; somit das Umschaltventil 40 derart verschlossen, dass der Druckluftanschluss 2 zur Entlüftungsleitung 70 nicht mehr strömungsverbunden ist.

Fig.10 zeigt eine beispielhafte konstruktive Realisierung für ein Umschaltventil 40, mit einem mit einer Druckluftzuführung 1 verbundenen Drucksteueranschluss 41, einen mit der pneumatischen Hauptleitung 60 verbundenen Durchlassanschluss 42 sowie eine mit der Entlüftungsleitung 70 verbundenen Auslassanschluss 43, das derart druckluftgesteuert ausgebildet ist, dass eine Führung von Druckluft DL von der Druckluftzuführung 1 über das Umschaltventil 40 zur Entlüftungsleitung 70 einstellbar ist. Die Druckluftzuführung 1 ist über das Umschaltventil 40 zur Hauptleitung 60 druckunabhängig offen. Das Umschaltventil 40 weist einen Druckluftverteilraum 49 auf, in dem ein gegen die Federkraft F der Ventilfeder 47 bewegbarer vorliegend stempelförmig ausgebildeter Umschaltventilkörper 48 angeordnet ist. Die Ventilfeder 47 ist innerhalb des Umschaltventils 40 derart angeordnet, dass die Druckluftentlüftungsrichtung E parallel zur Federkraft F orientiert ist. Ein Federaufstand 74' der mit dem Umschaltventilkörper 48 in Kontakt stehenden Ventilfeder 47 wird durch das Umschaltventil 40 selbst gebildet, ein Ventilsitz 48' des Umschaltventilkörpers 48 ist vorliegend durch einen Dichtring des Umschaltventils 40 realisiert.

Im vorliegend in Fig. 10 gezeigten nicht druckbeaufschlagtem Zustand der Druckluftzuführung 1 ist der Durchlassanschluss 42 zur Entlüftungsleitung 70 strömungsverbunden. In diesem Zustand wird das Umschaltventil 40 durch die Federkraft F der Ventilfeder 47 geöffnet gehalten d. h. der Umschaltventilkörper 48 ist von seinem Ventilsitz 48' abgehoben. Durch eine (nicht gezeigte) Druckluftbeaufschlagung der Druckluftzuführung 1 wird der Umschaltventilkörper 48 entgegen der Federkraft F der Ventilfeder 47 bewegt und auf den den Ventilsitz 48' bildenden Dichtring gedrückt; somit das Umschaltventil 40 derart verschlossen, dass der Durchlassanschluss 42 zur Entlüftungsleitung 70 nicht mehr strömungsverbunden ist.

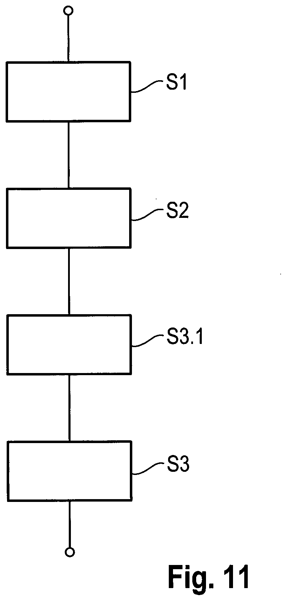

Fig.11 zeigt einen beispielhaften Verfahrensablauf, bei dem in einem ersten Schritt S1 in einem dem Ladebetrieb zeitlich vorausgehenden Verdichteranlaufbetrieb - das Umschaltventil 40 zur Entlüftungsleitung 70 durch einen ansteigenden Strömungsdruck p der verdichteten Druckluft DL geschlossen wird. Das Umschaltventil 40 wird dabei zur Entlüftungsleitung 70 nur so schnell geschlossen, dass ein den Strömungsdruck p der verdichteten Druckluft DL erzeugender Verdichter 31 im Wesentlichen drucklos anläuft.

In einem zweiten Schritt S2 wird in einem Ladebetrieb angesaugte Druckluft DL von einer Ladeanordnung 30 verdichtet und über ein Umschaltventil 40 zu einer pneumatischen Hauptleitung 60 zugeführt. Im Ladebetrieb wird das Umschaltventil 40 zur Entlüftungsleitung 70 durch einen Strömungsdruck der verdichteten Druckluft DL geschlossen gehalten.

In einem dem Entlüftungsbetrieb vorausgehenden Verdichterstoppbetrieb eines vorausgehenden dritten Schrittes S3.1 wird durch einen statisch undicht ausgelegten ersten Teil 60.1 der pneumatischen Hauptleitung 60 zwischen Ladeanordnung 30 und einem zweiten Teil 60.2 der pneumatischen Hauptleitung 60 vorentlüftet und so das Umschaltventil 40 zur Entlüftungsleitung 70 geöffnet. In einem dritten Schritt S3 wird in einem Entlüftungsbetrieb Druckluft DL aus der pneumatischen Hauptleitung 60 über das Umschaltventil 40 in eine Entlüftungsleitung 70 abgeleitet.

In allen Betriebsarten, bzw. Schritten S1, S2, S3.1, S3 wird ein erster Teil 60.1 der pneumatischen Hauptleitung 60 zwischen Ladeanordnung 30 und einem zweiten Teil 60.2 der pneumatischen Hauptleitung 60 druckunabhängig offen gehalten.

### Bezugszeichenliste (Bestandteil der Beschreibung)

- 0: Ansauganschluss
- 1: Druckluftzuführung
- 2: Druckluftanschluss
- 3: Entlüftungsanschluss
- 0.31: Filter
- 10: Druckluftversorgungsanlage
- 20: Ansaugleitung
- 30: Ladeanordnung
- 31: Verdichter
- 32: Zuführungsleitung
- 40: Umschaltventil
- 40': Druckluftdurchschaltventil
- 41: Drucksteueranschluss
- 42: Durchlassanschluss
- 43: Auslassanschluss
- 47: Ventilfeder
- 48: Umschaltventilkörper
- 48': Ventilsitz des Umschaltventilkörpers
- 48": Engstelle
- 49: Druckluftverteilraum
- 49': Hilfsdruckluftverteilraum
- 60: Hauptleitung
- 60.1, 60.2, 60.3: erster, zweiter, dritter Teil der pneumatischen Hauptleitung
- 60.1 - 60.2: statisch undicht ausgelegter pneumatischer Pfad
- 62: Lufttrockner
- 62.1, 62.2: erster, zweiter Anschluss des Lufttrockners
- 64: Hauptdrossel
- 70: Entlüftungsleitung
- 74: Entlüftungsdrossel
- 74': Federaufstand
- 90: Pneumatikanlage
- 92: Speicher
- 93: Balgventile
- 94: Speicherventil
- 95: Galerie
- 100: pneumatisches System
- DL: Druckluft
- p: Strömungsdruck
- p_max: Höchstdruck
- p_min: Mindestdruck
- V_min: Mindestvolumenstrom
- E: Druckluftentlüftungsrichtung
- F: Federkraft
- G: Gasdruckkraft
- S1: Betriebsart Verdichteranlaufbetrieb
- S2: Betriebsart Ladebetrieb
- S3.1: Betriebsart Verdichterstoppbetrieb
- S3: Betriebsart Entlüftungsbetrieb

## Patentansprüche

1. Druckluftversorgungsanlage (10) zum Betreiben einer Pneumatikanlage (90), insbesondere mit einem Speicher (92) oder dergleichen Druckluftvorratsbehälter und einer Anzahl von Bälgen (93) oder dergleichen Druckluftkammern, aufweisend:
- eine Druckluftzuführung (1), an die druckmittelzuführungsseitig eine Ladeanordnung (30) mit einem Verdichter (31) angeschlossen ist,
- einen Druckluftanschluss (2) zur Pneumatikanlage (90) und einen Entlüftungsanschluss (3) zur Umgebung, sowie
- eine pneumatische Hauptleitung (60) zwischen der Druckluftzuführung (1) und dem Druckluftanschluss (2), und
- eine Entlüftungsleitung (70) zwischen der Druckluftzuführung (1) und dem Entlüftungsanschluss (3) **dadurch gekennzeichnet, dass**
- der Druckluftzuführung (1) ein Umschaltventil (40) zugeordnet ist, wobei
- das Umschaltventil (40) derart druckluftgesteuert ausgebildet ist, dass die Druckluftzuführung (1) über das Umschaltventil (40) zur Hauptleitung (60) offen ist oder zu öffnen ist und
- mittels einem von der Ladeanordnung (30) zur Hauptleitung (60) erzeugbaren Strömungsdrucks (p) an der Druckluftzuführung (1)
- in nicht druckbeaufschlagtem Zustand der Druckluftzuführung (1) der Druckluftanschluss (2) zur Entlüftungsleitung (70) strömungsverbunden ist, und
- in druckbeaufschlagtem Zustand der Druckluftzuführung (1) der Druckluftanschluss (2) zur Entlüftungsleitung (70) nicht strömungsverbunden ist, wobei das Umschaltventil (40) an der Druckluftzuführung (1) unter Anschluss eines ersten Teils (60.1) der pneumatischen Hauptleitung (60) an einem Drucksteueranschluss (41) und unter Anschluss eines zweiten Teils (60.2) der pneumatischen Hauptleitung (60) an einem Durchlassanschluss (42) und unter Anschluss der Entlüftungsleitung (70) an einem Auslassanschluss (43) angeordnet ist und wobei das Umschaltventil (40) derart druckluftgesteuert ausgebildet ist, dass dieses in Abhängigkeit eines dem Drucksteueranschluss (41) anliegenden Drucks (p) und/oder in Abhängigkeit eines vom Drucksteueranschluss (41) in die pneumatische Hauptleitung (60) strömenden Volumenstroms von Druckluft (DL) umschaltbar ist.

2. Druckluftversorgungsanlage nach Anspruch 1, **dadurch gekennzeichnet, dass**
- in dem nicht druckbeaufschlagtem Zustand der Druckluftzuführung (1) der Druckluftanschluss (2) zur Entlüftungsleitung (70) strömungsverbunden ist, wobei ein Auslassanschluss (43) zu öffnen ist, und
- in dem druckbeaufschlagtem Zustand der Druckluftzuführung (1) der Druckluftanschluss (2) zur Entlüftungsleitung (70) nicht strömungsverbunden ist, wobei ein Auslassanschluss (43) zu schließen ist.

3. Druckluftversorgungsanlage nach Anspruch 1 oder 2, **dadurch gekennzeichnet, dass** das Umschaltventil (40) einen Druckluftverteilraum (49) aufweist, von dem
ein mit der Ladeanordnung (30) verbundener Drucksteueranschluss (41),
ein mit der pneumatischen Hauptleitung (60) verbundener Durchlassanschluss (42), und ein mit der Entlüftungsleitung (70) verbundener Auslassanschluss (43) abgeht, wobei
ein gegen Federkraft (F) bewegbarer Umschaltventilkörper (48) bei offenem Durchlassanschluss (42) zur Hauptleitung (60) in nicht druckbeaufschlagtem Zustand des Drucksteueranschlusses (41) den Auslassanschluss (43) zur Entlüftungsleitung (70) öffnet und
in druckbeaufschlagtem Zustand den Auslassanschluss (43) zur Entlüftungsleitung (70) schließt.

4. Druckluftversorgungsanlage nach einem der vorhergehenden Ansprüche, **dadurch gekennzeichnet, dass** die Druckluftzuführung (1) über das Umschaltventil (40) zur Hauptleitung (60) druckunabhängig offen ist oder zu öffnen ist, wobei das Umschaltventil (40) ausschließlich über den Drucksteueranschluss (41) und/oder direkt über den Betrieb des Verdichters (31) druckluftgesteuert ausgebildet ist.

5. Druckluftversorgungsanlage nach einem der vorhergehenden Ansprüche, **dadurch gekennzeichnet, dass** die Druckluftzuführung (1) über das Umschaltventil (40) zur Hauptleitung (60) druckabhängig offen ist oder zu öffnen ist, wobei das Umschaltventil (40) über den Drucksteueranschluss (41) und/oder direkt über den Betrieb des Verdichters (31) druckluftgesteuert ausgebildet ist, wobei ein Mittel zur Druckbegrenzung dem Drucksteueranschluss (41) vorgeschaltet und/oder nachgeschaltet ist oder mit diesem realisiert ist.

6. Druckluftversorgungsanlage nach einem der vorhergehenden Ansprüche, **dadurch gekennzeichnet, dass** das Umschaltventil (40) derart druckluftgesteuert ausgebildet ist, dass mittels diesem der Durchlassanschluss (42) mit dem Auslassanschluss (43) verbindbar ist, für den Fall, dass ein an dem Drucksteueranschluss (41) anliegender Druck (p) einen Höchstdruck (p_max) überschreitet und/oder eine den Drucksteueranschluss (41) durchströmende Druckluft (DL) einen Mindestvolumenstrom (V_min) unterschreitet.

7. Druckluftversorgungsanlage nach einem der vorhergehenden Ansprüche, **dadurch gekennzeichnet, dass** dem Drucksteueranschluss (41) ein Druckluftdurchschaltventil (40') vorgeschaltet und/oder nachgeschaltet ist, das derart ausgebildet ist, dass dies erst bei einem an dem Druckluftdurchschaltventil (40') anliegenden Mindestdruck (p_min) durchschaltbar ist.

8. Druckluftversorgungsanlage nach einem der vorhergehenden Ansprüche, **dadurch gekennzeichnet, dass** das Umschaltventil (40) eine mit dem Umschaltventilkörper (48) wirkverbundene Ventilfeder (47) aufweist, deren Ventilfederkraft (F) ausgebildet ist, eine drucksteueranschlussseitig am Umschaltventilkörper (48) anliegende Gasdruckkraft (G) zu überwinden, für den Fall, dass der Verdichter (31) in Ruhe ist.

9. Druckluftversorgungsanlage nach einem der vorhergehenden Ansprüche, **dadurch gekennzeichnet, dass** der Verdichter (31) und/oder der Auslassanschluss (43) statisch undicht ausgelegt ist, derart dass unter Umschalten des Umschaltventils (40) eine an den Druckluftanschluss (2) anschließbare Pneumatikanlage (90) automatisch entlüftbar ist.

10. Druckluftversorgungsanlage nach einem der vorhergehenden Ansprüche, **dadurch gekennzeichnet, dass** der Umschaltventilkörper (48) koaxial oder quer beweglich zur Entlüftungsleitung (70) angeordnet ist.

11. Druckluftversorgungsanlage nach einem der vorhergehenden Ansprüche, **gekennzeichnet durch** eine Entlüftungsdrossel (74), die gleichzeitig als Federaufstand (74 ) der mit dem Umschaltventilkörper (48) wirkverbundenen Ventilfeder (47) dient, die durch einen teilweise in die Entlüftungsleitung (70) hineinragenden Ventilsitz (48) des Umschaltventilkörpers (48) als Engstelle (48") gebildet ist.

12. Pneumatisches System (100) mit einer Druckluftversorgungsanlage (10) nach einem der vorhergehenden Ansprüche und mit einer Pneumatikanlage (90), die an dem Druckluftanschluss (2) der Druckluftversorgungsanlage (10) angeschlossen ist und einen Speicher (92) oder dergleichen Druckluftvorratsbehälter und eine Anzahl von Bälgen (93) oder dergleichen Druckluftkammern aufweist.

13. Verfahren zum Betreiben einer Druckluftversorgungsanlage nach einem der Ansprüche 1 bis 12, bei dem
- in einem Ladebetrieb (S2) angesaugte Druckluft von einer Ladeanordnung (30) verdichtet und über ein Umschaltventil (40) zu einer pneumatischen Hauptleitung (60) zugeführt wird,
- in einem Entlüftungsbetrieb (S3) Druckluft aus der pneumatischen Hauptleitung (60) über das Umschaltventil (40) in eine Entlüftungsleitung (70) abgeleitet wird, wobei
- im Ladebetrieb das Umschaltventil (40) zur Entlüftungsleitung (70) durch einen Strömungsdruck (p) der verdichteten Druckluft (DL) geschlossen gehalten wird, wobei
- das Umschaltventil (40) an der Druckluftzuführung (1) unter Anschluss eines ersten Teils (60.1) der pneumatischen Hauptleitung (60) an einem Drucksteueranschluss (41) und unter Anschluss eines zweiten Teils (60.2) der pneumatischen Hauptleitung (60) an einem Durchlassanschluss (42) und unter Anschluss der Entlüftungsleitung (70) an einem Auslassanschluss (43) angeordnet ist und wobei
- das Umschaltventil (40) derart druckluftgesteuert wird, dass dieses in Abhängigkeit eines an einem Drucksteueranschluss (41) anliegenden Drucks (p) und/oder in Abhängigkeit eines von einem Drucksteueranschluss (41) in die pneumatische Hauptleitung (60) strömenden Volumenstroms von Druckluft (DL) umgeschaltet wird.

14. Verfahren nach Anspruch 13, **dadurch gekennzeichnet, dass** in einem dem Ladebetrieb zeitlich vorausgehenden Verdichteranlaufbetrieb (S1)
- das Umschaltventil (40) zur Entlüftungsleitung (70) durch einen ansteigenden Strömungsdruck (p) der verdichteten Druckluft (DL) geschlossen wird.

15. Verfahren nach Anspruch 14, **dadurch gekennzeichnet, dass** das Umschaltventil (40) zur Entlüftungsleitung (70) nur so schnell geschlossen wird, dass ein den Strömungsdruck (p) der verdichteten Druckluft (DL) erzeugender Verdichter (31) im Wesentlichen drucklos anläuft.

16. Verfahren nach einem der Ansprüche 13 bis 15, **dadurch gekennzeichnet, dass** die pneumatische Hauptleitung (60) in einem dem Entlüftungsbetrieb (S3) vorausgehenden Verdichterstoppbetrieb (S3.1) durch einen statisch undicht ausgelegten pneumatischen Pfad (60.1 - 60.2) zwischen Ladeanordnung (30) und pneumatischer Hauptleitung (60) vorentlüftet und so das Umschaltventil (40) zur Entlüftungsleitung (70) geöffnet wird.

17. Verfahren nach Anspruch 16, **dadurch gekennzeichnet, dass** durch einen statisch undicht ausgelegten ersten Teil (60.1) der pneumatischen Hauptleitung (60) zwischen Ladeanordnung (30) und einem zweiten Teil (60.2) der pneumatischen Hauptleitung (60) vorentlüftet und so das Umschaltventil (40) zur Entlüftungsleitung (70) geöffnet wird.

18. Verfahren nach einem der Ansprüche 13 bis 17, **dadurch gekennzeichnet, dass** in allen Betriebsarten ein pneumatischer Pfad (60.1 - 60.2) zwischen Ladeanordnung (30) und pneumatischer Hauptleitung (60) druckunabhängig offen gehalten ist.

19. Verfahren nach Anspruch 18, **dadurch gekennzeichnet, dass** in allen Betriebsarten (S1, S2, S3.1, S3) ein erster Teil (60.1) der pneumatischen Hauptleitung (60) zwischen Ladeanordnung (30) und einem zweiten Teil (60.2) der pneumatischen Hauptleitung (60) druckunabhängig offen gehalten ist.

20. Verfahren nach einem der Ansprüche 13 bis 19, **dadurch gekennzeichnet, dass** das Umschaltventil (40) zur Entlüftungsleistung (70) ausschließlich durch einen Strömungsdruck (p) der verdichteten Druckluft (DL) geschlossen wird.

21. Verfahren nach einem der Ansprüche 13 bis 20, **dadurch gekennzeichnet, dass** vor einem Verdichterstoppbetrieb (S3.1) einer an die Druckluftversorgungsanlage (10) angeschlossenen Pneumatikanlage (90) ein Ladebetrieb (S2) der Druckluftversorgungsanlage (10) erfolgt.

## Claims

1. Compressed-air supply system (10) for operating a pneumatic installation (90), said system in particular having a reservoir (92) or similar pressure-air reservoir and a number of bellows (93) or similar pressure-air chambers, the supply system having:
- a pressure-air feed (1), to which a charging assembly (30) having a compressor (31) is connected on the pressure-medium feed side,
- a pressure-air connection (2) to the pneumatic installation (90) and a venting connection (3) to the environment,
- a pneumatic main line (60) between the pressure-air feed (1) and the pressure-air connection (2), and
- a vent line (70) between the pressure-air feed (1) and the venting connection (3) **characterized in that**
- a changeover valve (40) is associated with the pressure-air feed (1), wherein
- the changeover valve (40) is designed to be controlled by pressure air in such a way that the pressure-air feed (1) is open or can be opened via the changeover valve (40) to the main line (60), and,
- by means of a flow pressure (p) at the pressure-air feed (1) that can be generated by the charging assembly (30) to the main line (60),
- in the unpressurized state of the pressure-air feed (1), the pressure-air connection (2) is connected to the vent line (70) in terms of flow, and
- in the pressurized state of the pressure-air feed (1), the pressure-air connection (2) is not connected to the vent line (70) in terms of flow, wherein the changeover valve (40) is arranged on the pressure-air feed (1) while connecting a first part (60.1) of the pneumatic main line (60) to a pressure control connection (41) and connecting a second part (60.2) of the pneumatic main line (60) to a pass-through connection (42) and connecting the vent line (70) to an outlet connection (43) and wherein the changeover valve (40) is designed to be controlled by pressure air in such a way that it is switched over in accordance with a pressure (p) applied to the pressure control connection (41) and/or in accordance with a volume flow of pressure air (DL) flowing from the pressure control connection (41) into the pneumatic main line (60).

2. Compressed-air supply system according to Claim 1, **characterized in that**,
- in the unpressurized state of the pressure-air feed (1), the pressure-air connection (2) is connected to the vent line (70) in terms of flow, wherein an outlet connection (43) can be opened, and
- in the pressurized state of the pressure-air feed (1), the pressure-air connection (2) is not connected to the vent line (70) in terms of flow, wherein an outlet connection (43) can be closed.

3. Compressed-air supply system according to Claim 1 or 2, **characterized in that** the changeover valve (40) has a pressure-air distribution chamber (49), from which
a pressure control connection (41) connected to the charging assembly (30),
a pass-through connection (42) connected to the pneumatic main line (60), and an outlet connection (43) connected to the vent line (70) start, wherein,
when the pass-through connection (42) to the main line (60) is open,
a changeover valve body (48), which can be moved against spring force (F), opens the outlet connection (43) to the vent line (70) in the unpressurized state of the pressure control connection (41) and
closes the outlet connection (43) to the vent line (70) in the pressurized state.

4. Compressed-air supply system according to one of the preceding claims,
**characterized in that** the pressure-air feed (1) is open or can be opened via the changeover valve (40) to the main line (60) independently of the pressure, wherein the changeover valve (40) is designed to be controlled by pressure air exclusively via the pressure control connection (41) and/or directly via the operation of the compressor (31).

5. Compressed-air supply system according to one of the preceding claims,
**characterized in that** the pressure-air feed (1) is open or can be opened via the changeover valve (40) to the main line (60) in a manner dependent on the pressure, wherein the changeover valve (40) is designed to be controlled by pressure air via the pressure control connection (41) and/or directly via the operation of the compressor (31), wherein a means for pressure limitation is arranged upstream and/or downstream of the pressure control connection (41) or is implemented by means of said connection.

6. Compressed-air supply system according to one of the preceding claims,
**characterized in that** the changeover valve (40) is designed to be controlled by pressure in such a way that it is possible, by means of said valve, to connect the pass-through connection (42) to the outlet connection (43) in the event that a pressure (p) applied to the pressure control connection (41) exceeds a maximum pressure (p_max) and/or pressure air (DL) flowing through the pressure control connection (41) falls below a minimum volume flow (V_min).

7. Compressed-air supply system according to one of the preceding claims,
**characterized in that** a pressure-air switch-through valve (40') is connected upstream and/or downstream of the pressure control connection (41), said valve being designed in such a way that it can be switched through only when there is a minimum pressure (p_min) applied to the pressure-air switch-through valve (40').

8. Compressed-air supply system according to one of the preceding claims,
**characterized in that** the changeover valve (40) has a valve spring (47), which is operatively connected to the changeover valve body (48) and the valve spring force (F) of which is designed to overcome a gas pressure force (G), applied to the changeover valve body (48) on the pressure-control connection side, in the event that the compressor (31) is at rest.

9. Compressed-air supply system according to one of the preceding claims,
**characterized in that** the compressor (31) and/or the outlet connection (43) are designed not to be leaktight in the static state, such that, when the changeover valve (40) is switched over, a pneumatic installation (90) that can be connected to the pressure-air connection (2) can be automatically vented.

10. Compressed-air supply system according to one of the preceding claims, **characterized in that** the changeover valve body (48) is arranged so as to be movable coaxially with or transversely to the vent line (70).

11. Compressed-air supply system according to one of the preceding claims, **characterized by** a vent restrictor (74), which serves simultaneously as a spring support (74) for the valve spring (47), which is operatively connected to the changeover valve body (48), said restrictor being formed as a constriction (48") by a valve seat (48), projecting partially into the vent line (70), of the changeover valve body (48).

12. Pneumatic system (100) having a compressed-air supply system (10) according to one of the preceding claims and having a pneumatic installation (90), which is connected to the pressure-air connection (2) of the compressed-air supply system (10) and has an accumulator (92) or similar pressure-air reservoir and a number of a bellows (93) or similar pressure-air chambers.

13. Method for operating a compressed-air supply system according to one of Claims 1 to 12, in which
- pressure air drawn in in a charging mode (S2) is compressed by a charging assembly (30) and fed via a changeover valve (40) to a pneumatic main line (60),
- in a venting mode (S3), pressure air is discharged from the pneumatic main line (60) via the changeover valve (40) into a vent line (70), wherein,
- in the charging mode, the changeover valve (40) is held closed with respect to the vent line (70) by a flow pressure (p) of the compressed pressure air (DL), wherein
- the changeover valve (40) is arranged on the pressure-air feed (1) while connecting a first part (60.1) of the pneumatic main line (60) to a pressure control connection (41) and connecting a second part (60.2) of the pneumatic main line (60) to a pass-through connection (42) and connecting the vent line (70) to an outlet connection (43) and wherein
- the changeover valve (40) is designed to be controlled by pressure air in such a way that it is switched over in accordance with a pressure (p) applied to the pressure control connection (41) and/or in accordance with a volume flow of pressure air (DL) flowing from the pressure control connection (41) into the pneumatic main line (60).

14. Method according to Claim 13, **characterized in that**, in a compressor startup mode (S1) preceding the charging mode,
- the changeover valve (40) is closed with respect to the vent line (70) by a rising flow pressure (p) of the compressed pressure air (DL).

15. Method according to Claim 14, **characterized in that** the changeover valve (40) is closed with respect to the vent line (70) only with a speed such that a compressor (31) generating the flow pressure (p) of the compressed pressure air (DL) starts up substantially under no pressure.

16. Method according to one of Claims 13 to 15, **characterized in that** the pneumatic main line (60) is pre-vented in a compressor stop mode (S3.1) preceding the venting mode (S3) by a pneumatic path (60.1 - 60.2), designed not to be leaktight in the static state, between the charging assembly (30) and the pneumatic main line (60), and in this way the changeover valve (40) is opened to the vent line (70).

17. Method according to Claim 16, **characterized in that** pre-venting is carried out by a first part (60.1), designed not to be leaktight in the static state, of the pneumatic main line (60) between the charging assembly (30) and a second part (60.2) of the pneumatic main line (60), and in this way the changeover valve (40) is opened to the vent line (70).

18. Method according to one of Claims 13 to 17, **characterized in that**, in all operating modes, a pneumatic path (60.1 - 60.2) between the charging assembly (30) and the pneumatic main line (60) is held open independently of the pressure.

19. Method according to Claim 18, **characterized in that** a first part (60.1) of the pneumatic main line (60) between the charging assembly (30) and a second part (60.2) of the pneumatic main line (60) is held open independently of the pressure in all operating modes (S1, S2, S3.1, S3).

20. Method according to one of Claims 13 to 19, **characterized in that** the changeover valve (40) is closed with respect to the vent line (70) exclusively by a flow pressure (p) of the compressed pressure air (DL) .

21. Method according to one of Claims 13 to 20, **characterized in that** a charging mode (S2) of the compressed-air supply system (10) takes place before a compressor stop mode (S3.1) of a pneumatic installation (90) connected to the compressed-air supply system (10) .

## Revendications

1. Installation d'alimentation en air comprimé (10) pour faire fonctionner une installation pneumatique (90), en particulier avec un accumulateur (92) ou un réservoir d'air comprimé similaire et une pluralité de soufflets (93) ou de chambres à air comprimé similaires, présentant :
- une alimentation en air comprimé (1) à laquelle est raccordé un agencement de suralimentation (30) avec un compresseur (31) du côté de l'alimentation en fluide sous pression,
- un raccord d'air comprimé (2) vers l'installation pneumatique (90) et un raccord de désaérage (3) vers l'environnement, ainsi que
- une conduite pneumatique principale (60) entre l'alimentation en air comprimé (1) et le raccord d'air comprimé (2), et
- une conduite de désaérage (70) entre l'alimentation en air comprimé (1) et le raccord de désaérage (3),
**caractérisée en ce que**
- une soupape d'inversion (40) est associée à l'alimentation en air comprimé (1),
- la soupape d'inversion (40) étant réalisée de manière à être commandée par l'air comprimé de telle sorte que l'alimentation en air comprimé (1) soit ouverte ou doive être ouverte vers la conduite principale (60) par le biais de la soupape d'inversion (40), et
- au moyen d'une pression d'écoulement (p) au niveau de l'alimentation en air comprimé (1), pouvant être produite par l'agencement de suralimentation (30) vers la conduite principale (60),
- dans l'état non sollicité en pression de l'alimentation en air comprimé (1), le raccord d'air comprimé (2) étant connecté fluidiquement avec la conduite de désaérage (70), et
- dans l'état sollicité en pression de l'alimentation en air comprimé (1), le raccord d'air comprimé (2) n'étant pas connecté fluidiquement avec la conduite de désaérage (70), la soupape d'inversion (40) étant disposée au niveau de l'alimentation en air comprimé (1) avec raccordement d'une première partie (60.1) de la conduite pneumatique principale (60) à un raccord de commande de pression (41) et avec raccordement d'une deuxième partie (60.2) de la conduite pneumatique principale (60) à un raccord de passage (42) et avec raccordement de la conduite de désaérage (70) à un raccord de sortie (43), et la soupape d'inversion (40) étant réalisée de manière commandée par l'air comprimé de telle sorte que celle-ci puisse être commutée en fonction d'une pression (p) s'appliquant au niveau du raccord de commande de pression (41) et/ou en fonction d'un débit volumique d'air comprimé (DL) s'écoulant depuis le raccord de commande de pression (41) dans la conduite pneumatique principale (60).

2. Installation d'alimentation en air comprimé selon la revendication 1, **caractérisée en ce que**
- dans l'état non sollicité en pression de l'alimentation en air comprimé (1), le raccord d'air comprimé (2) est connecté fluidiquement avec la conduite de désaérage (70), un raccord de sortie (43) devant être ouvert, et
- dans l'état sollicité en pression de l'alimentation en air comprimé (1), le raccord d'air comprimé (2) n'est pas connecté fluidiquement avec la conduite de désaérage (70), un raccord de sortie (43) devant être fermé.

3. Installation d'alimentation en air comprimé selon la revendication 1 ou 2, **caractérisée en ce que** la soupape d'inversion (40) présente un espace de distribution d'air comprimé (49) depuis lequel partent un raccord de commande de pression (41) connecté à l'agencement de suralimentation (30), un raccord de passage (42) connecté à la conduite pneumatique principale (60) et un raccord de sortie (43) connecté à la conduite de désaérage (70),
un corps de soupape d'inversion (48) déplaçable à l'encontre d'une force de ressort (F), lorsque le raccord de passage (42) vers la conduite principale (60) est ouvert, dans l'état non sollicité en pression du raccord de commande de pression (41), ouvrant le raccord de sortie (43) vers la conduite de désaérage (70) et
dans l'état sollicité en pression, fermant le raccord de sortie (43) vers la conduite de désaérage (70).

4. Installation d'alimentation en air comprimé selon l'une quelconque des revendications précédentes, **caractérisée en ce que** l'alimentation en air comprimé (1) est ouverte ou doit être ouverte indépendamment de la pression par le biais de la soupape d'inversion (40) vers la conduite principale (60), la soupape d'inversion (40) étant réalisée de manière commandée par l'air comprimé exclusivement par le biais du raccord de commande de pression (41) et/ou directement par le biais du fonctionnement du compresseur (31).

5. Installation d'alimentation en air comprimé selon l'une quelconque des revendications précédentes, **caractérisée en ce que** l'alimentation en air comprimé (1) est ouverte ou doit être ouverte en fonction de la pression par le biais de la soupape d'inversion (40) vers la conduite principale (60), la soupape d'inversion (40) étant réalisée de manière commandée par l'air comprimé par le biais du raccord de commande de pression (41) et/ou directement par le biais du fonctionnement du compresseur (31), un moyen de limitation de la pression étant monté en amont du raccord de commande de pression (41) et/ou étant monté en aval de celui-ci ou étant réalisé avec celui-ci.

6. Installation d'alimentation en air comprimé selon l'une quelconque des revendications précédentes, **caractérisée en ce que** la soupape d'inversion (40) est réalisée de manière commandée par l'air comprimé de telle sorte qu'au moyen de celle-ci, le raccord de passage (42) puisse être raccordé au raccord de sortie (43) au cas où une pression (p) s'appliquant au niveau du raccord de commande de pression (41) dépasse une pression maximale (p_max) et/ou un air comprimé (DL) s'écoulant à travers le raccord de commande de pression (41) passe en dessous d'un débit volumique minimal (V_min).

7. Installation d'alimentation en air comprimé selon l'une quelconque des revendications précédentes, **caractérisée en ce qu'**une soupape de commutation d'air comprimé (40') est montée en amont et/ou en aval du raccord de commande de pression (41), laquelle est réalisée de telle sorte qu'elle puisse être commutée seulement dans le cas d'une pression minimale (p_min) s'appliquant au niveau de la soupape de commutation d'air comprimé (40').

8. Installation d'alimentation en air comprimé selon l'une quelconque des revendications précédentes, **caractérisée en ce que** la soupape d'inversion (40) présente un ressort de soupape (47) en liaison fonctionnelle avec le corps de soupape d'inversion (48), dont la force de ressort de soupape (F) est prévue pour surmonter une force de pression de gaz (G) s'appliquant du côté du raccord de commande de pression au niveau du corps de soupape d'inversion (48) au cas où le compresseur (31) est au repos.

9. Installation d'alimentation en air comprimé selon l'une quelconque des revendications précédentes, **caractérisée en ce que** le compresseur (31) et/ou le raccord de sortie (43) sont réalisés de manière non étanche à l'état statique, de telle sorte que par commutation de la soupape d'inversion (40), une installation pneumatique (90) pouvant être raccordée au raccord d'air comprimé (2) puisse être désaérée automatiquement.

10. Installation d'alimentation en air comprimé selon l'une quelconque des revendications précédentes, **caractérisée en ce que** le corps de soupape d'inversion (48) est disposé de manière déplaçable coaxialement ou transversalement par rapport à la conduite de désaérage (70).

11. Installation d'alimentation en air comprimé selon l'une quelconque des revendications précédentes, **caractérisée par** un étranglement de désaérage (74) qui sert simultanément de support de ressort (74) du ressort de soupape (47) en liaison fonctionnelle avec le corps de soupape d'inversion (48), qui est formé sous forme de point d'étranglement (48") par un siège de soupape (48 ), pénétrant partiellement dans la conduite de désaérage (70), du corps de soupape d'inversion (48) .

12. Système pneumatique (100) comprenant une installation d'alimentation en air comprimé (10) selon l'une quelconque des revendications précédentes et une installation pneumatique (90) qui est raccordée au raccord d'air comprimé (2) de l'installation d'alimentation en air comprimé (10) et qui présente un accumulateur (92) ou un réservoir d'air comprimé similaire ainsi qu'une pluralité de soufflets (93) ou de chambres à air comprimé similaires.

13. Procédé pour faire fonctionner une installation d'alimentation en air comprimé selon l'une quelconque des revendications 1 à 12, dans lequel
- dans un mode de suralimentation (S2), l'air comprimé aspiré est comprimé par un agencement de suralimentation (30) et est acheminé par le biais d'une soupape d'inversion (40) à une conduite pneumatique principale (60),
- dans un mode de désaérage (S3) l'air comprimé provenant de la conduite pneumatique principale (60) est dévié par le biais de la soupape d'inversion (40) dans une conduite de désaérage (70),
- en mode de suralimentation, la soupape d'inversion (40) vers la conduite de désaérage (70) est maintenue fermée par une pression d'écoulement (p) de l'air comprimé sous pression (DL),
- la soupape d'inversion (40) étant disposée au niveau de l'alimentation en air comprimé (1) avec raccordement d'une première partie (60.1) de la conduite pneumatique principale (60) à un raccord de commande de pression (41) et avec raccordement d'une deuxième partie (60.2) de la conduite pneumatique principale (60) à un raccord de passage (42) et avec raccordement de la conduite de désaérage (70) à un raccord de sortie (43), et
- la soupape d'inversion (40) étant commandée par l'air comprimé de telle sorte que celle-ci soit commutée en fonction d'une pression (p) s'appliquant au niveau du raccord de commande de pression (41) et/ou en fonction d'un débit volumique d'air comprimé (DL) s'écoulant depuis un raccord de commande de pression (41) dans la conduite pneumatique principale (60).

14. Procédé selon la revendication 13, **caractérisé en ce que** dans un mode de fonctionnement de démarrage du compresseur (S1) se produisant préalablement au mode de suralimentation
- la soupape d'inversion (40) vers la conduite de désaérage (70) est fermée par une augmentation de la pression d'écoulement (p) de l'air comprimé sous pression (DL).

15. Procédé selon la revendication 14, **caractérisé en ce que** la soupape d'inversion (40) vers la conduite de désaérage (70) est seulement fermée avec une vitesse telle qu'un compresseur (31) générant la pression d'écoulement (p) de l'air comprimé sous pression (DL) démarre essentiellement sans pression.

16. Procédé selon l'une quelconque des revendications 13 à 15, **caractérisé en ce que** la conduite pneumatique principale (60), dans un mode de fonctionnement d'arrêt du compresseur (S3.1) précédant le mode de désaérage (S3) est préalablement désaérée par un chemin pneumatique réalisé de manière non étanche à l'état statique (60.1 - 60.2) entre l'agencement de suralimentation (30) et la conduite pneumatique principale (60) et de ce fait la soupape d'inversion (40) vers la conduite de désaérage (70) est ouverte.

17. Procédé selon la revendication 16, **caractérisé en ce que** par une première partie (60.1) conçue de manière non étanche à l'état statique de la conduite pneumatique principale (60), il se produit un désaérage préalable entre l'agencement de suralimentation (30) et une deuxième partie (60.2) de la conduite pneumatique principale (60) et de ce fait la soupape d'inversion (40) vers la conduite de désaérage (70) est ouverte.

18. Procédé selon l'une quelconque des revendications 13 à 17, **caractérisé en ce que** dans tous les modes de fonctionnement, un chemin pneumatique (60.1 - 60.2) entre l'agencement de suralimentation (30) et la conduite pneumatique principale (60) est maintenu ouvert indépendamment de la pression.

19. Procédé selon la revendication 18, **caractérisé en ce que** dans tous les modes de fonctionnement (S1, S2, S3.1, S3) une première partie (60.1) de la conduite pneumatique principale (60) entre l'agencement de suralimentation (30) et une deuxième partie (60.2) de la conduite pneumatique principale (60) est maintenue ouverte indépendamment de la pression.

20. Procédé selon l'une quelconque des revendications 13 à 19, **caractérisé en ce que** la soupape d'inversion (40) vers la conduite de désaérage (70) est exclusivement fermée par une pression d'écoulement (p) de l'air comprimé sous pression (DL) .

21. Procédé selon l'une quelconque des revendications 13 à 20, **caractérisé en ce qu'**avant un mode de fonctionnement d'arrêt du compresseur (S3.1) d'une installation pneumatique (90) raccordée à l'installation d'alimentation en air comprimé (10), un mode de suralimentation (S2) de l'installation d'alimentation en air comprimé (10) est enclenché.
